# NEUE EUROPÄISCHE PATENTSCHRIFT

(11) **EP 3 081 075 B2**
(45) Veröffentlichungstag und Bekanntmachung des Hinweises auf die Entscheidung über den Einspruch: **28.07.2021**
(45) Hinweis auf die Patenterteilung: 06.06.2018
(21) Anmeldenummer: 16160063.0
(22) Anmeldetag: 14.03.2016
(51) Int. Cl.: A01G 3/02

(54) **SCHNEIDEVORRICHTUNG**
CUTTING DEVICE
DISPOSITIF DE COUPE

(30) Priorität: 17.04.2015 DE 102015206959
(43) Veröffentlichungstag der Anmeldung: 19.10.2016
(60) Teilanmeldung: 18171393.4
(73) Patentinhaber: Robert Bosch GmbH, 70442 Stuttgart (DE)
(72) Erfinder: SOLTESZ, Robert, 3530 Miskolc (HU); NAGY, Janos, 3443 Meznagymihaly (HU); SEPSI, Krisztian, 3531 Miskolc (HU); GLANVILLE, Mark, Ipswich, IP4 4 RL (GB); ZADOR, Endre, Ipswich, Suffolk (County), IP38DH (GB)

(56) Entgegenhaltungen:
- EP-B1- 2 624 679
- WO-A2-2012/033540
- CN-Y- 2 527 086
- DE-B4-102010 016 296
- DE-B4-102010 016 296
- DE-C1- 4 209 530
- DE-C1- 4 209 530
- DE-U1- 29 812 948
- JP-A- 2013 146 544
- US-A- 3 834 020
- US-A1- 2010 163 263

## Beschreibung

### Stand der Technik

Es ist bereits eine Schneidevorrichtung, insbesondere eine Gartenschneidevorrichtung, vorgeschlagen worden.

Aus DE 10 2010 016 296 B4 ist bereits eine Schneidevorrichtung mit zwei relativ zueinander bewegbaren Schneiden, mit zwei relativ zueinander bewegbaren Griffelementen und mit einer Antriebseinheit bekannt, die in einem Betriebszustand dazu vorgesehen ist, eine Bewegung der zweiten Schneide relativ zu der ersten Schneide zu unterstützen.

### Offenbarung der Erfindung

Die Erfindung geht aus von einer Schneidevorrichtung, insbesondere einer Gartenschneidevorrichtung, mit zwei relativ zueinander bewegbaren Schneidelementen, mit zwei relativ zueinander bewegbaren Griffelementen und mit zumindest einer Antriebseinheit, die in zumindest einem Betriebszustand dazu vorgesehen ist, eine Bewegung des zweiten Schneidelements relativ zu dem ersten Schneidelement zumindest zu unterstützen.

Es wird vorgeschlagen, dass die Schneidevorrichtung zumindest eine selbstschaltende Kupplungseinheit aufweist, die in zumindest einem Betriebszustand, in welchem die Antriebseinheit deaktiviert ist, zu einer Entkopplung der Antriebseinheit vorgesehen ist. Vorzugsweise ist die Schneidevorrichtung als eine Schere, besonders bevorzugt als eine Gartenschere ausgebildet. Bevorzugt sind die zwei relativ zueinander bewegbaren Schneiden schwenkbar zueinander gelagert.

Unter einer "Gartenschneidevorrichtung" soll in diesem Zusammenhang insbesondere eine Schneidevorrichtung verstanden werden, die zu einem Einsatz an Pflanzen vorgesehen ist. Vorzugsweise soll darunter insbesondere eine Schneidevorrichtung verstanden werden, die zu einem Schneiden von Gewächsen, Hecken, Sträuchern, Ästen und/oder anderen, einem Fachmann als sinnvoll erscheinenden Objekten vorgesehen ist. Unter einem "Schneidelement" soll in diesem Zusammenhang insbesondere ein Element der Schneidevorrichtung verstanden werden, das zu einer direkten Kontaktierung eines zu schneidenden Objekts vorgesehen ist. Vorzugsweise soll darunter ein Element verstanden werden, das zu einer direkten Teilung eines zu schneidenden Objekts vorgesehen ist. Grundsätzlich ist dabei denkbar, dass zumindest eines der Schneidelemente passiv ausgebildet ist, wie beispielsweise als ein Amboss und/oder als eine passive Schneidkante. Bevorzugt weist jedoch zumindest ein Schneidelement eine aktive Schneidkante, insbesondere eine Klinge auf, die zu einem aktiven Schneiden vorgesehen ist. Ferner soll in diesem Zusammenhang unter einem "Griffelement" insbesondere ein Element verstanden werden, dass zumindest einen Teil eines Handgriffs bildet. Vorzugsweise soll darunter ein Element verstanden werden, welches in einem Betrieb zumindest teilweise von einem Bediener umgriffen wird. Bevorzugt werden in einem Betrieb beide Griffelemente von einem Bediener, insbesondere mit derselben Hand, umgriffen. Darunter, dass "eine Bewegung des zweiten Schneidelements relativ zu dem ersten Schneidelement unterstützt" wird, soll in diesem Zusammenhang insbesondere verstanden werden, dass durch die Antriebseinheit eine Kraft erzeugt wird, welche zumindest teilweise in eine der Bedienerkraft gleichgerichteten Richtung wirkt. Vorzugsweise soll darunter verstanden werden, dass in zumindest einem Betriebszustand eine manuelle Kraft, welche insbesondere eine Schließbewegung der Schneidelemente relativ zueinander bewirkt, durch eine zusätzlich durch die Antriebseinheit erzeugte Kraft unterstützt wird.

Unter einer "selbstschaltenden Kupplungseinheit" soll in diesem Zusammenhang insbesondere eine Kupplungseinheit verstanden werden, welche frei von externen, insbesondere elektrischen, Schaltsignalen, insbesondere einer Steuereinheit, betätigt wird. Vorzugsweise soll darunter eine Kupplungseinheit verstanden werden, welche frei von expliziten Schaltsignalen betätigt wird, insbesondere zu einem Wechsel zwischen den Kupplungszuständen. Bevorzugt soll darunter insbesondere eine Kupplungseinheit verstanden werden, welche aufgrund von mechanischen Einflussfaktoren betätigt wird. Besonders bevorzugt soll darunter insbesondere eine Kupplungseinheit verstanden werden, welche abhängig von zumindest einem Parameter einer Antriebs- und/oder Abtriebsseite betätigt wird. Es sind verschiedene, einem Fachmann als sinnvoll erscheinende selbstschaltende Kupplungseinheiten denkbar, wie beispielsweise Fliehkraftkupplungen, Freilaufkupplungen und/oder Sicherheitskupplungen. Die Kupplungseinheit kann daher insbesondere drehzahlbetätigt, momentbetätigt, richtungsbetätigt und/oder kraftflussbetätigt ausgebildet sein. Ferner soll in diesem Zusammenhang unter einer "Entkopplung der Antriebseinheit" insbesondere eine Entkopplung der Antriebseinheit von einem Schließmechanismus der Schneidevorrichtung verstanden werden.

Durch die erfindungsgemäße Ausgestaltung der Schneidevorrichtung kann eine vorteilhafte Entkopplung der Antriebseinheit erreicht werden. Hierdurch kann insbesondere ein vorteilhaft leichtgängiger Handbetrieb der Schneidevorrichtung ermöglicht werden. Ferner kann vorteilhaft eine Kupplungseinheit bereitgestellt werden, welche vorteilhaft frei von elektrischen Schaltsignalen betätigt wird. Dadurch kann insbesondere auf eine Steuereinheit zu einer Ansteuerung der Kupplungseinheit verzichtet werden. Vorzugsweise kann dadurch eine besonders zuverlässige Kupplungseinheit bereitgestellt werden. Insbesondere kann eine Kupplungseinheit bereitgestellt werden, die unabhängig von einer Energieversorgung betätigbar ausgebildet ist.

Ferner wird vorgeschlagen, dass die zumindest eine selbstschaltende Kupplungseinheit, in zumindest einem Betriebszustand zu einer Realisierung eines vollständigen Handbetriebs dazu vorgesehen ist, die Antriebseinheit zu entkoppeln. Unter einem "vollständigen Handbetrieb" soll in diesem Zusammenhang insbesondere ein Betriebszustand verstanden werden, bei welchem die Schneidevorrichtung frei von einer Unterstützung der Antriebseinheit betrieben wird. Vorzugsweise soll darunter ein Betriebszustand verstanden werden, bei welchem die Schneidevorrichtung ausschließlich durch die aktive Kraft eines Bedieners betrieben wird. Besonders bevorzugt soll darunter ein Betriebszustand verstanden werden in welchem die Antriebseinheit entkoppelt ist und daher nicht zu einer Unterstützung einer Bewegung des zweiten Schneidelements relativ zu dem ersten Schneidelement genutzt werden kann, werden. Dadurch kann insbesondere ein vorteilhaft leichtgängiger Handbetrieb der Schneidevorrichtung ermöglicht werden. Insbesondere kann dadurch erreicht werden, dass die Schneidevorrichtung vorteilhaft auch ohne die Antriebseinheit, wie beispielsweise bei einer fehlenden Energieversorgung und/oder bei leichten Schneidearbeiten, genutzt werden kann.

Des Weiteren wird vorgeschlagen, dass die zumindest eine selbstschaltende Kupplungseinheit als Freilaufkupplung ausgebildet ist. Unter einer "Freilaufkupplung" soll in diesem Zusammenhang insbesondere eine selbstschaltende Kupplung verstanden werden, welche richtungsbetätigt und/oder kraftflussbetätigt ausgebildet ist. Bevorzugt ist die Freilaufkupplung zumindest richtungsbetätigt. Vorzugsweise ist die Freilaufkupplung dazu vorgesehen abhängig von einer Drehrichtung, insbesondere einer Antriebs- und/oder Abtriebsseite der Kupplungseinheit, und/oder abhängig von einer Richtung einer Krafteinwirkung auf die Freilaufkupplung, zu öffnen und/oder zu schließen. Bei einer Richtung einer Krafteinwirkung kann beispielsweise unterschieden werden, ob die Kraft von der Antriebsseite oder von der Abtriebsseite auf die Freilaufkupplung wirkt. Bevorzugt ist die Freilaufkupplung dazu vorgesehen, die Antriebseinheit in zumindest einem Betriebszustand abhängig von einer Drehrichtung, insbesondere einer Antriebs- und/oder Abtriebsseite, und/oder abhängig von einer Richtung einer Krafteinwirkung auf die Freilaufkupplung zu öffnen oder zu schließen. Dadurch kann insbesondere eine besonders vorteilhafte selbstschaltende Kupplungseinheit bereitgestellt werden. Insbesondere kann dadurch ein vorteilhaft leichtgängiger Handbetrieb der Schneidevorrichtung ermöglicht werden. Vorzugsweise kann dadurch eine besonders zuverlässige Kupplungseinheit bereitgestellt werden.

Es wird ferner vorgeschlagen, dass die zumindest eine selbstschaltende Kupplungseinheit zumindest einen Klemmkörper aufweist. Vorzugsweise weist die selbstschaltende Kupplungseinheit mehrere, insbesondere zumindest drei, Klemmkörper auf. Bevorzugt weist die selbstschaltende Kupplungseinheit mehrere, in Umfangsrichtung hintereinander angeordnete Klemmkörper auf. Unter einem "Klemmkörper" soll in diesem Zusammenhang insbesondere Element der Kupplungseinheit verstanden werden, welches in zumindest einem Betriebszustand, insbesondere in einem geschlossenen Zustand der Kupplungseinheit, dazu vorgesehen ist, zwischen zwei drehbar zueinander gelagerten Drehelementen der Kupplungseinheit zu verklemmen. Vorzugsweise ist der Klemmkörper in einem verklemmten Zustand mit einem Drehelement in Drehrichtung formschlüssig und mit dem anderen Drehelement in Drehrichtung kraftschlüssig, insbesondere reibschlüssig, verbunden. Bevorzugt soll darunter insbesondere ein Element verstanden werden, das dazu vorgesehen ist, abhängig von einem Betriebszustand der Kupplungseinheit die Drehelemente der Kupplungseinheit drehfest miteinander zu koppeln oder die Drehelemente der Kupplungseinheit bezüglich einer Bewegung in Umfangsrichtung relativ zueinander zu entkoppeln. Vorzugsweise sind die Klemmkörper in einem geschlossenen Zustand der Kupplungseinheit zwischen den Drehelementen verklemmt. Bevorzugt weist zumindest eines der Drehelemente der Kupplungseinheit Rampen auf, durch welche ein radialer Abstand zwischen den Drehelementen variiert. Werden die Klemmkörper in einen Bereich mit einem geringen radialen Abstand bewegt, erfolgt eine Drehmitnahme des rampenlosen Drehelements mittels Reibung. Werden die Klemmkörper in einen Bereich mit einem großen radialen Abstand bewegt, erfolgt keine Drehmitnahme des Rampenlosen Drehelements, da eine Reibung nicht ausreicht. Es sind verschiedene, einem Fachmann als sinnvoll erscheinende Klemmkörper denkbar, vorzugsweise sind die Klemmkörper jedoch zumindest teilweise zylindrisch oder zumindest teilweise kugelförmig ausgebildet. Dadurch kann insbesondere eine besonders vorteilhafte selbstschaltende Kupplungseinheit bereitgestellt werden. Insbesondere kann dadurch eine vorteilhafte, insbesondere konstruktiv einfache Freilaufkupplung bereitgestellt werden. Bevorzugt kann dadurch eine besonders zuverlässige selbstschaltende Kupplungseinheit bereitgestellt werden.

Es wird weiter vorgeschlagen, dass die zumindest eine selbstschaltende Kupplungseinheit zumindest einen den Klemmkörper aufnehmenden Käfig und ein Bremselement aufweist, welches in zumindest einem Betriebszustand zu einem Abbremsen des Käfigs vorgesehen ist. Vorzugsweise weist die Kupplungseinheit mehrere Klemmkörper auf, welche in demselben Käfig aufgenommen sind. Bevorzugt nimmt der Käfig die Klemmkörper in voneinander getrennten Aufnahmebereichen auf. Vorzugsweise ist das Bremselement in zumindest einem Betriebszustand dazu vorgesehen, eine Trägheit des Käfigs zu erhöhen. Bevorzugt ist das Bremselement dazu vorgesehen, ein ungewolltes verdrehen des Käfigs zu verhindern. Besonders bevorzugt ist das Bremselement dazu vorgesehen, ein Verdrehen des Käfigs bis zu einer definierten Krafteinwirkung zu unterbinden. Vorzugsweise ist das Bremselement federnd gelagert. Insbesondere wird das Bremselement mit einer definierten Kraft gegen den Käfig gedrückt. Unter einem "Käfig" soll in diesem Zusammenhang insbesondere ein Element der Kupplungseinheit verstanden werden, welches zu einer Positionierung und/oder Führung des zumindest einen Klemmkörpers, insbesondere in Umfangsrichtung vorgesehen ist. Vorzugsweise ist der Käfig dazu vorgesehen, mehrere Klemmkörper in Umfangsrichtung zueinander zu beabstanden und insbesondere über einen Umfang gleichmäßig zu verteilen. Besonders bevorzugt ist der Käfig dazu vorgesehen, mehrere Klemmkörper in Umfangsrichtung relativ zueinander zu führen. Dadurch kann insbesondere eine vorteilhaft definierte Bewegung der Klemmkörper erreicht werden. Insbesondere kann bei mehreren Klemmkörpers erreicht werden, dass die Klemmkörper in Umfangsrichtung dieselbe Bewegung vollführen. Es kann vorzugsweise ein kontrolliertes Klemmen der Klemmkörper ermöglicht werden. Ferner kann durch das Bremselement eine ungewollte Bewegung des zumindest einen Klemmkörpers vermieden werden. Insbesondere kann so ein ungewolltes verklemmen verhindert werden. Des Weiteren kann dadurch erreicht werden, dass die Klemmkörper lediglich bei einer Krafteinwirkung eines formschlüssigen Drehelements der Kupplungseinheit verdreht werden. Insbesondere kann durch das Bremselement zuverlässig eine Öffnung der Kupplungseinheit erreicht werden. Vorzugsweise kann über das Bremselement erreicht werden, dass die Klemmkörper bei einer Öffnungsbewegung der Kupplungseinheit stehen bleiben und damit eine Öffnung der Kupplungseinheit ermöglichen.

Ferner wird vorgeschlagen, dass die zumindest eine selbstschaltende Kupplungseinheit zumindest ein Sperrklinkenelement aufweist. Vorzugsweise ist das Sperrklinkenelement von einem der Griffelemente betätigbar ausgebildet. Bevorzugt weist die zumindest eine selbstschaltende Kupplungseinheit zudem ein Sperrrad auf, in welches das Sperrklinkenelement in zumindest einem Zustand eingreift. Unter einem "Sperrklinkenelement" soll in diesem Zusammenhang insbesondere ein Element verstanden werden, welches in zumindest einem Betriebszustand dazu vorgesehen ist, in ein drehbar zu dem Sperrklinkenelement gelagertes Element einzugreifen. Vorzugsweise ist das Sperrklinkenelement dazu vorgesehen, eine Drehrichtung des Elements relativ zu dem Sperrklinkenelement zu unterbinden und vorzugsweise eine entgegengesetzte Richtung freizugeben. Besonders bevorzugt soll unter einem Sperrklinkenelement ein Element verstanden werden, welches in zumindest einem Betriebszustand dazu vorgesehen ist, in ein Sperrrad einzugreifen und eine Drehrichtung des Sperrrads relativ zu dem Sperrklinkenelement zu unterbinden und vorzugsweise eine entgegengesetzte Drehrichtung des Sperrrads freizugeben. Vorzugsweise ist das Sperrklinkenelement in zumindest einem Betriebszustand dazu vorgesehen, in eine Verzahnung des Sperrrads einzugreifen. Das Sperrrad weist vorzugsweise asymmetrische Zahnflanken auf. Dabei ist insbesondere eine Zahnflanke so steil, dass das Sperrklinkenelement gegen die Zahnflanke verklemmt, und eine Zahnflanke so flach, dass das Sperrklinkenelement über diese hinweg gleiten und von dieser angehoben werden kann. Dadurch kann insbesondere eine besonders vorteilhafte selbstschaltende Kupplungseinheit bereitgestellt werden. Insbesondere kann dadurch eine vorteilhafte Freilaufkupplung bereitgestellt werden. Bevorzugt kann dadurch eine besonders zuverlässige selbstschaltende Kupplungseinheit bereitgestellt werden.

Des Weiteren wird vorgeschlagen, dass die Schneidevorrichtung zumindest eine von der Antriebseinheit antreibbare Seilwinde und zumindest ein zumindest teilweise auf der Seilwinde aufgewickeltes Seil aufweist, welches zumindest teilweise zwischen den Griffelementen aufgespannt ist. Vorzugsweise ist das Seil zwischen den Schneidelementen abgewandten Enden der Griffelemente aufgespannt. Bevorzugt ist das Seil an einem Griffelement fest fixiert und an dem anderen Griffelement über die Seilwinde befestigt. Über die Seilwinde kann insbesondere eine freie Länge des Seils verändert werden. Vorzugsweise ist die Seilwinde über die Kupplungseinheit von der Antriebseinheit antreibbar ausgebildet. Bevorzugt ist die Seilwinde in zumindest einem Betriebszustand über die Kupplungseinheit von der Antriebseinheit trennbar ausgebildet. Besonders bevorzugt bildet die Seilwinde eine Abtriebsseite der Kupplungseinheit. Unter einer "Seilwinde" soll in diesem Zusammenhang insbesondere eine Seiltrommel, insbesondere eine zylindrische Seiltrommel, verstanden werden, welche in zumindest einem Betriebszustand von einer Antriebseinheit antreibbar ausgebildet ist. Dadurch kann eine vorteilhafte Krafteinwirkung der Antriebseinheit erreicht werden. Insbesondere kann dadurch konstruktiv einfach eine Unterstützung einer Bewegung des zweiten Schneidelements relativ zu dem ersten Schneidelement ermöglicht werden. Ein Bediener kann so vorteilhaft von der Antriebseinheit bei einer Schließbewegung unterstützt werden. Ferner kann durch die Krafteinwirkung der Antriebseinheit an den Griffelementen ein vorteilhaft hohes Moment bereitgestellt werden. Dadurch kann wiederum eine Leistung der Antriebseinheit gering gehalten werden.

Zudem wird vorgeschlagen, dass das zumindest eine Seil in einem Bereich zwischen einem Griffbereich der Griffelemente und einem Drehgelenk, über welches die Griffelemente zueinander verschwenkbar ausgebildet sind, zwischen den Griffelementen aufgespannt. Vorzugsweise ist das Seil nahe dem Drehgelenk, insbesondere näher als 10 cm, vorzugsweise näher als 8 cm und besonders bevorzugt näher als 5 cm an dem Drehgelenk, zwischen den Griffelementen aufgespannt. Unter einem "Griffbereich" soll in diesem Zusammenhang insbesondere ein Bereich der Griffelemente verstanden werden, in welchem die Griffelemente regulär von einem Bediener umgriffen werden. Dadurch kann vorteilhaft verhindert werden, dass ein Bediener von dem Seil gestört wird. Zudem kann das Seil vorteilhaft kurz ausgeführt werden. Hierdurch kann eine Seilwinde insbesondere vorteilhaft klein ausgeführt werden. Ferner kann mit einer geringen Drehzahl der Seilwinde ein schnelles Schließen der Schneidevorrichtung ermöglicht werden.

Es wird ferner vorgeschlagen, dass die zumindest eine selbstschaltende Kupplungseinheit zumindest teilweise in die zumindest eine Seilwinde integriert ist. Vorzugsweise ist die Kupplungseinheit zumindest teilweise von der Seilwinde umgriffen. Bevorzugt bildet die Seilwinde ein Funktionsbauteil der Kupplungseinheit. Darunter, dass "die Kupplungseinheit in die Seilwinde integriert ist" soll in diesem Zusammenhang insbesondere verstanden werden, dass die Kupplungseinheit zumindest teilweise räumlich in der Seilwinde angeordnet ist, bzw. zumindest teilweise von der Seilwinde umgriffen ist. Vorzugsweise ist die Kupplungseinheit funktional in die Seilwinde integriert. Bevorzugt bildet die Seilwinde direkt ein Drehelement, insbesondere ein äußeres Drehelement, der Kupplungseinheit. Dabei soll unter "zumindest teilweise umgreifen" insbesondere verstanden werden, dass die Kupplungseinheit in zumindest einer Ebene in einem Winkelbereich von zumindest 90°, vorzugsweise von zumindest 180° und besonders bevorzugt von zumindest 360° von der Seilwinde umschlossen wird. Dadurch kann vorteilhaft eine Anzahl von Bauteilen gering gehalten werden. Ferner kann dadurch eine vorteilhaft kompakte Bauweise erreicht werden. Insbesondere kann so auf Zwischenwellen verzichtet werden.

Es wird weiter vorgeschlagen, dass die Schneidevorrichtung zumindest ein mit der Seilwinde verbundenes Federelement aufweist, welches insbesondere als eine Spiralfeder ausgebildet ist und welches in zumindest einem Betriebszustand zu einer Spannung des Seils vorgesehen ist. Vorzugsweise ist das Federelement dazu vorgesehen, eine Spannung des Seils zu gewährleisten. Bevorzugt ist das Federelement dazu vorgesehen, die Seilwinde mit einer Kraft, insbesondere mit einer Kraft in Umfangsrichtung zu beaufschlagen. Besonders bevorzugt ist das Federelement dazu vorgesehen, über die Seilwinde eine Zugkraft auf das Seil zu wirken. Insbesondere soll über das Federelement das Seil auf Spannung gehalten werden. Vorzugsweise weist das Federelement eine Federkraft auf, die geringer ist, als eine Federkraft einer Öffnungsfeder. Unter einem "Federelement" soll insbesondere ein makroskopisches Element verstanden werden, das zumindest eine Erstreckung und/oder eine Wicklungsanzahl aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung und/oder Wicklungsanzahl abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Durch das Federelement kann insbesondere auch bei einem vollständigen Handbetrieb eine Spannung des Seils gewährleistet werden. So kann vorteilhaft ein ungewolltes verknoten des Seils verhindert werden. Zudem kann antriebslos ein Aufwickeln des Seils gewährleistet werden.

Zudem wird vorgeschlagen, dass die zumindest eine selbstschaltende Kupplungseinheit, in einem ersten Griffelement der Griffelemente, an einem den Schneidelementen abgewandten Ende, angeordnet ist. Vorzugsweise ist die zumindest eine selbstschaltende Kupplungseinheit in einem Gehäuse des ersten Griffelements angeordnet. Dadurch kann eine vorteilhaft kompakte Bauweise erreicht werden. Ferner kann dadurch eine besonders vorteilhafte Gewichtsverteilung erreicht werden. Insbesondere kann ein Gewicht der Kupplungseinheit direkt in einem Bereich einer Hand eines Bedieners angeordnet werden. Dadurch kann wiederum ein hoher Bedienkomfort erreicht werden.

Ferner wird vorgeschlagen, dass die Schneidevorrichtung zumindest eine Getriebeeinheit aufweist, welche in einem ersten Griffelement der Griffelemente angeordnet ist. Vorzugsweise ist die Getriebeeinheit in einem Gehäuse des Griffelements angeordnet. Unter einer "Getriebeeinheit" soll in diesem Zusammenhang insbesondere eine Übersetzungsgetriebeeinheit mit einem Übersetzungsverhältnis größer 2, vorzugsweise größer 10 und besonders bevorzugt größer 50 verstanden werden. Dadurch kann eine vorteilhaft kompakte Bauweise erreicht werden. Ferner kann dadurch eine besonders vorteilhafte Gewichtsverteilung erreicht werden. Insbesondere kann ein Gewicht der Getriebeeinheit direkt in einem Bereich einer Hand eines Bedieners angeordnet werden. Dadurch kann wiederum ein hoher Bedienkomfort erreicht werden. Ferner kann so insbesondere eine Anmutung erreicht werden, welche der einer herkömmlichen handbetriebenen Gartenschere zumindest ähnelt.

Des Weiteren wird vorgeschlagen, dass die Antriebseinheit und die Getriebeeinheit räumlich zwischen den Schneidelementen und der zumindest einen selbstschaltenden Kupplungseinheit angeordnet sind. Vorzugsweise sind die Schneidelemente und die zumindest eine selbstschaltende Kupplungseinheit jeweils auf gegenüberliegenden Seiten eines gedachten geometrischen Quaders angeordnet, der die Antriebseinheit und die Getriebeeinheit gerade noch vollständig umschließt. Bevorzugt sind die Antriebseinheit, die Getriebeeinheit und die Kupplungseinheit in dem ersten Griffelement angeordnet. Dadurch kann eine vorteilhaft kompakte Bauweise erreicht werden. Ferner kann dadurch eine besonders vorteilhafte Gewichtverteilung erreicht werden.

Ferner wird vorgeschlagen, dass die zumindest eine Getriebeeinheit, zumindest zwei Getriebestufen aufweist, zwischen welchen die zumindest eine selbstschaltende Kupplungseinheit angeordnet ist. Vorzugsweise weist die Getriebeeinheit zwei Getriebe, insbesondere zwei Planetengetriebe auf, zwischen welchen die Kupplungseinheit angeordnet ist. Bevorzugt ist die Kupplungseinheit entlang eines Antriebsflusses betrachtet zwischen den Getrieben der Getriebeeinheit angeordnet. Besonders bevorzugt ist die Kupplungseinheit in die Getriebeeinheit integriert. Dadurch kann insbesondere eine vorteilhaft kompakte Bauweise erreicht werden. Ferner kann dadurch vorteilhaft ein auf die zumindest eine selbstschaltende Kupplungseinheit wirkendes Drehmoment gering gehalten werden.

Es wird ferner vorgeschlagen, dass die Schneidevorrichtung zumindest einen Kraftsensor aufweist, welcher in einem zweiten Griffelement der Griffelemente integriert ist. Vorzugsweise weist die Schneidevorrichtung zumindest eine Steuereinheit auf, welche mit dem Kraftsensor verbunden ist und zu einer Steuerung der Antriebseinheit vorgesehen ist. Bevorzugt ist die Steuereinheit zu einer Steuerung der Antriebseinheit abhängig von einem Signal des Kraftsensors vorgesehen. Besonders bevorzugt ist die Steuereinheit dazu vorgesehen, die Antriebseinheit bei Überschreibung eines definierten Messwerts des Kraftsensors die Antriebseinheit zu aktivieren. Vorzugsweise ist der Kraftsensor mit einem Griffbereich des zweiten Griffelements gekoppelt. Besonders bevorzugt ist der Griffbereich zu einem Grundkörper des zweiten Griffelements beweglich gelagert. Vorzugsweise ist der Kraftsensor dazu vorgesehen, eine auf das zweite Griffelement wirkende Kraft, insbesondere relativ zu dem ersten Griffelement zu sensieren. Vorzugsweise kann der Kraftsensor sowohl dazu vorgesehen sein, eine genaue Kraft als auch lediglich eine Überschreitung einer Grenzkraft zu erfassten. Dadurch kann vorteilhaft eine von einem Bediener auf die Schneidevorrichtung ausgeübte Kraft erfasst werden. Vorzugsweise kann beispielsweise erfasst werden, wie viel Kraft von einem Bediener auf die Schneidevorrichtung ausgeübt werden muss.

Es wird weiter vorgeschlagen, dass die Schneidevorrichtung zumindest einen Wegsensor aufweist. Vorzugsweise ist der Wegsensor als Hallsensor ausgebildet. Bevorzugt ist der Wegsensor dazu vorgesehen, eine Winkellage der Griffelemente relativ zueinander zu detektieren. Vorzugsweise weist die Schneidevorrichtung zumindest eine Steuereinheit auf, welche mit dem Wegsensor verbunden ist und zu einer Steuerung der Antriebseinheit vorgesehen ist. Besonders bevorzugt ist die Steuereinheit dazu vorgesehen, mittels eines Messwerts des Wegsensors, die Antriebseinheit bei Erreichen einer Endposition der Griffelemente relativ zueinander zu deaktivieren. Dadurch kann vorteilhaft genau eine Winkellage der Griffelemente relativ zueinander detektiert werden. Insbesondere kann dadurch zuverlässig ein stoppen der Antriebseinheit in einer Endposition der Schneidevorrichtung realisiert werden.

Ferner wird ein Verfahren zu einem Betrieb einer Schneidevorrichtung vorgeschlagen. Es wird vorgeschlagen, dass bei Überschreitung einer definierten Bedienerkraft die Antriebseinheit einem Schließmechanismus der Schneidevorrichtung zugeschalten wird. Dadurch kann eine vorteilhaft komfortable Schneidevorrichtung bereitgestellt werden. Ferner kann insbesondere erreicht werden, dass die Antriebseinheit lediglich bei schweren Schneidarbeiten zugeschalten wird. Hierdurch kann ein Energieverbrauch gering gehalten werden.

Des Weiteren wird vorgeschlagen, dass beim Erreichen einer Endposition der Schneidevorrichtung die Antriebseinheit selbsttätig stoppt und zu einer Öffnung der Kupplungseinheit kurzzeitig entgegen einer Antriebsrichtung angetrieben wird. Dabei soll unter einer "Antriebsrichtung" insbesondere eine Drehrichtung der Antriebseinheit verstanden werden, in welche die Antriebseinheit in einem regulären Betrieb, insbesondere zu einer Unterstützung einer Schneidbewegung, dreht. Dadurch kann vorteilhaft ein schnelles Öffnen der Schneidevorrichtung ermöglicht werden. Insbesondere kann dadurch eine vorteilhaft intuitive Bedienung erreicht werden. Es kann zuverlässig eine Öffnung der Kupplungseinheit ermöglicht werden.

Alternativ vorgeschlagen, dass beim Erreichen einer Endposition der Schneidevorrichtung die Antriebseinheit selbsttätig deaktiviert und die Kupplungseinheit bei Ausbleiben einer Drehbewegung der Antriebseinheit selbsttätig entkoppelt wird. Dadurch kann vorteilhaft ein schnelles Öffnen der Schneidevorrichtung ermöglicht werden. Insbesondere kann dadurch eine vorteilhaft intuitive Bedienung erreicht werden.

Die erfindungsgemäße Schneidevorrichtung sowie das Verfahren sollen hierbei nicht auf die oben beschriebene Anwendung und Ausführungsform beschränkt sein. Insbesondere können die erfindungsgemäße Schneidevorrichtung sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Schneidevorrichtung mit zwei Schneidelementen, zwei Griffelementen und einer Antriebseinheit in einer schematischen Teilschnittdarstellung,
- Fig. 2: die erfindungsgemäße Schneidevorrichtung sowie während eines Betriebs wirkende Kräfte in einer schematischen Darstellung,
- Fig. 3: einen Teilausschnitt III der erfindungsgemäßen Schneidevorrichtung mit einer Kupplung und einer Getriebeeinheit in einer schematischen Schnittdarstellung,
- Fig. 4: die Kupplungseinheit, eine Seilwinde und ein Federelement einer erfindungsgemäßen Schneidevorrichtung in einer schematischen Darstellung,
- Fig. 5: die Kupplungseinheit der Schneidevorrichtung in einem eingekuppelten Zustand in einer schematischen Darstellung,
- Fig. 6: die Kupplungseinheit der Schneidevorrichtung in einem ausgekuppelten Zustand in einer schematischen Darstellung,
- Fig. 7: ein Ablaufdiagramm eines Verfahrens zu einem Betrieb der erfindungsgemäßen Schneidevorrichtung,
- Fig. 8: eine alternative erfindungsgemäße Schneidevorrichtung mit zwei Schneidelementen, zwei Griffelementen und einer Antriebseinheit in einer schematischen Teilschnittdarstellung,
- Fig. 9: einen Teilausschnitt der alternativen erfindungsgemäßen Schneidevorrichtung in einer schematischen Schnittdarstellung in dem Schnitt IX-IX,
- Fig. 10: einen Teilausschnitt der alternativen erfindungsgemäßen Schneidevorrichtung in einer schematischen Schnittdarstellung in dem Schnitt X-X,
- Fig. 11: einen Teilausschnitt der alternativen erfindungsgemäßen Schneidevorrichtung in einer schematischen Schnittdarstellung in dem Schnitt XI-XI,
- Fig. 12: einen Teilausschnitt der alternativen erfindungsgemäßen Schneidevorrichtung in einer schematischen Schnittdarstellung in dem Schnitt XII-XII,
- Fig. 13: eine weitere alternative erfindungsgemäße Schneidevorrichtung mit zwei Schneidelementen, zwei Griffelementen und einer Antriebseinheit in einer schematischen Teilschnittdarstellung,
- Fig. 14: die Antriebseinheit und eine Getriebeeinheit der weiteren alternativen erfindungsgemäßen Schneidevorrichtung in einer schematischen Darstellung,
- Fig. 15: einen Teilausschnitt der alternativen erfindungsgemäßen Schneidevorrichtung mit einer Kupplungseinheit in einer schematischen Darstellung,
- Fig. 16: einen Teilausschnitt XVI der alternativen erfindungsgemäßen Schneidevorrichtung mit einer Kupplungseinheit in einer schematischen Darstellung,
- Fig. 17: eine weitere alternative erfindungsgemäße Schneidevorrichtung mit zwei Schneidelementen, zwei Griffelementen und einer Antriebseinheit in einer schematischen Teilschnittdarstellung und

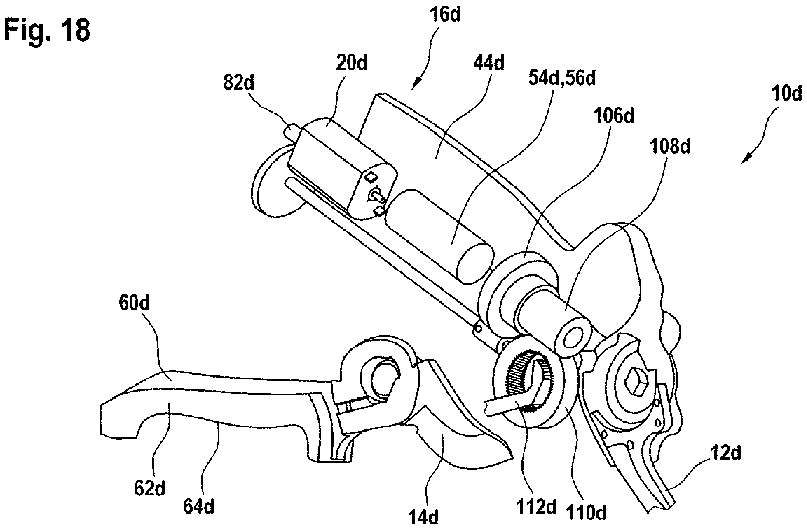

- Fig. 18: die weitere alternative erfindungsgemäße Schneidevorrichtung in einer schematischen Explosionsdarstellung.

### Beschreibung der Ausführungsbeispiele

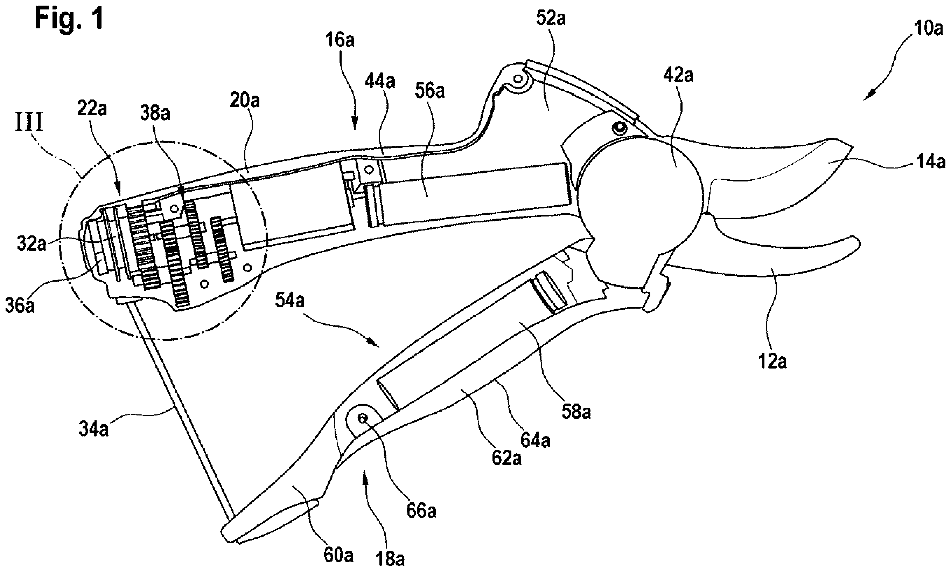

Figur 1 zeigt eine erfindungsgemäße Schneidevorrichtung 10a. Die Schneidevorrichtung 10a ist als eine Gartenschneidevorrichtung ausgebildet. Die Schneidevorrichtung 10a ist als eine Gartenschere ausgebildet. Grundsätzlich wäre jedoch auch eine andere, einem Fachmann als sinnvoll erscheinende Ausbildung der Schneidevorrichtung 10a denkbar. Die Schneidevorrichtung 10a weist zwei relativ zueinander bewegbare Schneidelemente 12a, 14a auf. Die Schneidelemente 12a, 14a sind relativ zueinander verschwenkbar. Ein erstes Schneidelement 12a ist dabei als passive Schneide mit einer Schneidkante ausgebildet. Das zweite Schneidelement 14a ist als aktive Schneide mit einer Klingenkante ausgebildet. Ferner weist die Schneidevorrichtung 10a zwei relativ zueinander bewegbare Griffelemente 16a, 18a auf. Die Griffelemente 16a, 18a sind relativ zueinander verschwenkbar. Die Griffelemente 16a, 18a sind über ein Drehgelenk 42a verschwenkbar zueinander ausgebildet. Die Schneidelemente 12a, 14a sind ebenfalls über das Drehgelenk 42a verschwenkbar zueinander ausgebildet. Das Drehgelenk 42a ist zwischen den Griffelementen 16a, 18a und den Schneidelementen 12a, 14a angeordnet. Ein erstes Griffelement 16a und das erste Schneidelement 12a sind fest miteinander verbunden und auf verschiedenen Seiten des Drehgelenks 42a angeordnet. Ferner sind das zweite Griffelement 18a und das zweite Schneidelement 14a fest miteinander verbunden und auf verschiedenen Seiten des Drehgelenks 42a angeordnet. Die Griffelemente 16a, 18a sind dazu vorgesehen, von einem Bediener umgriffen zu werden. Die Griffelemente 16a, 18a sind dazu vorgesehen, von einem Bediener mit derselben Hand umgriffen zu werden. Grundsätzlich wäre jedoch auch denkbar, dass die Schneidevorrichtung 10a zu einer zweihändigen Bedienung vorgesehen ist. Des Weiteren ist in dem Drehgelenk 42a eine Öffnungsfeder 50a angeordnet. Die Öffnungsfeder 50a ist zwischen den Griffelementen 16a, 18a angeordnet. Die Öffnungsfeder 50a ist als eine Schraubenfeder ausgebildet. Die Öffnungsfeder 50a ist dazu vorgesehen, bei Nichtbelastung der Griffelemente 16a, 18a, die Griffelemente 16a, 18a auseinander zu drücken und die Schneidevorrichtung 10a damit zu öffnen.

Ferner weist die Schneidevorrichtung 10a eine Antriebseinheit 20a auf. Die Antriebseinheit 20a ist als ein Elektromotor ausgebildet. Die Antriebseinheit 20a ist als ein Elektromotor mit 3,6 V ausgebildet. Die Antriebseinheit 20a ist in dem ersten Griffelement 16a angeordnet. Die Antriebseinheit 20a ist in einem Griffgehäuse 44a des Griffelements 16a angeordnet. Das Griffgehäuse 44a weist zwei Gehäuseschalen auf, in welchen die Antriebseinheit 20a fest aufgenommen ist.

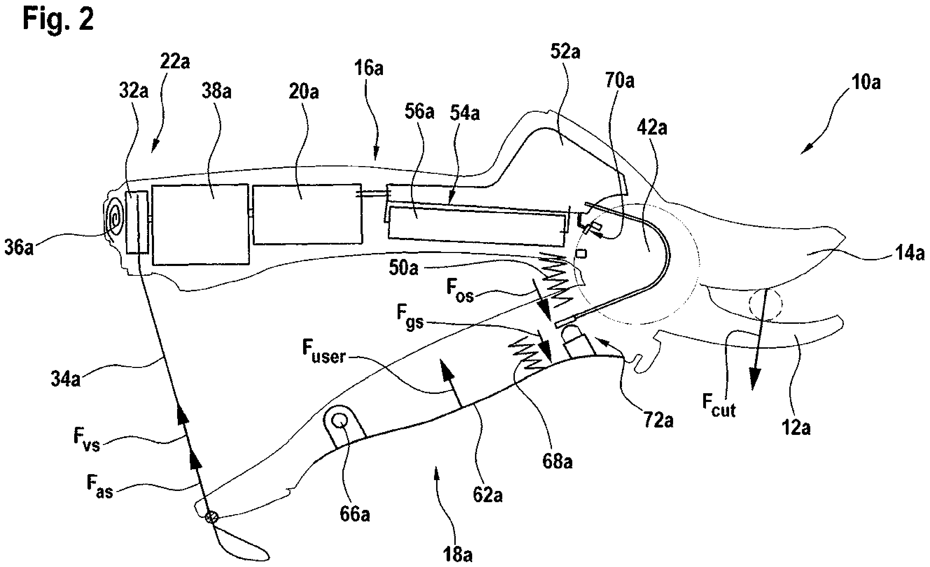

Die Antriebseinheit 20a ist in einem Betriebszustand dazu vorgesehen, eine Bewegung des zweiten Schneidelements 14a relativ zu dem ersten Schneidelement 12a zu unterstützen. Die Antriebseinheit 20a ist dazu vorgesehen, eine über die Griffelemente 16a, 18a ausgeführte Schließbewegung der Schneidevorrichtung 10a bei schweren Schneidearbeiten zu unterstützen. Dadurch kann eine von einem Bediener benötigte Kraft reduziert werden (Figur 2).

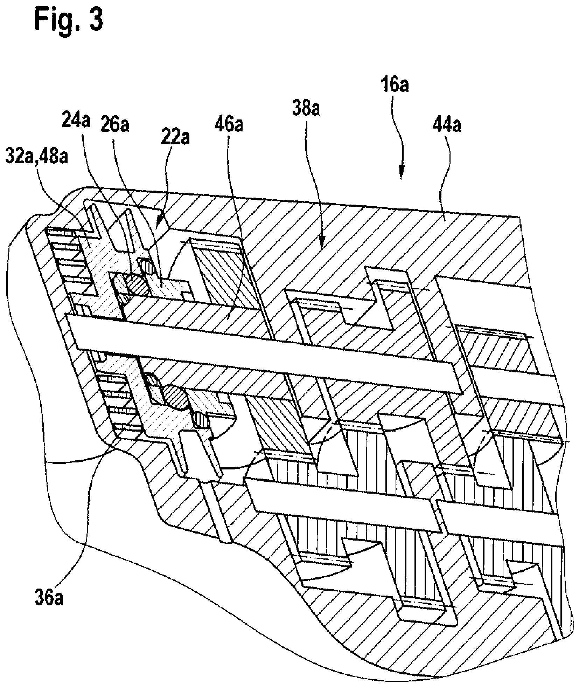

Des Weiteren weist die Schneidevorrichtung 10a eine Getriebeeinheit 38a auf. Die Getriebeeinheit 38a ist als ein Zahnradgetriebe ausgebildet. Die Getriebeeinheit 38a weist eine Übersetzung von 130:1 auf. Grundsätzlich wäre jedoch auch eine andere, einem Fachmann als sinnvoll erscheinende Übersetzung denkbar. Die Getriebeeinheit 38a ist in dem ersten Griffelement 16a angeordnet. Die Getriebeeinheit 38a ist in dem Griffgehäuse 44a des Griffelements 16a angeordnet. Die Getriebeeinheit 38a weist mehrere starre Achsen auf, die fest in dem Griffgehäuse 44a angeordnet sind. Auf den Achsen der Getriebeeinheit 38a sind Zahnräder über einen Gleitsitz gelagert. Eine Verzahnung der einzelnen Zahnräder ist der Übersichtlichkeit halber nicht weiter dargestellt. Die Getriebeeinheit 38a ist direkt von der Antriebseinheit 20a antreibbar. Eine Kraftübertragung von der Antriebseinheit 20a auf die Getriebeeinheit 38a erfolgt über ein Ritzel (Figur 3).

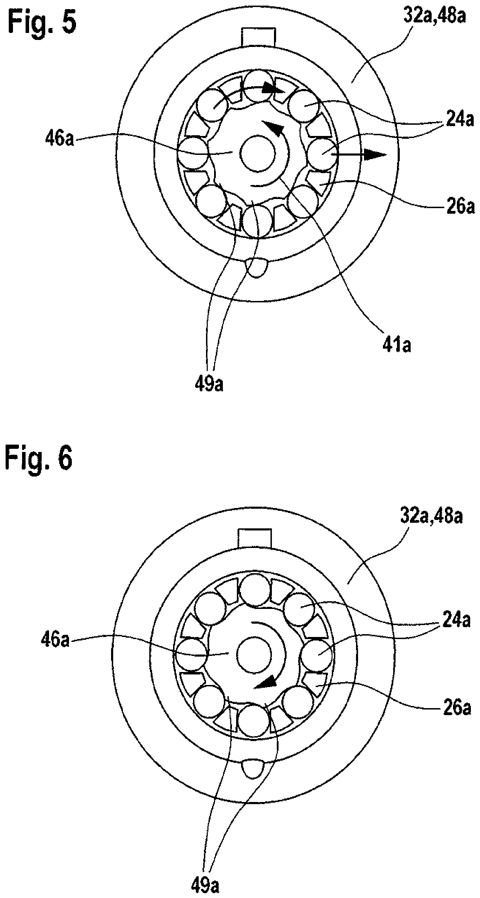

Die Schneidevorrichtung 10a weist ferner eine selbstschaltende Kupplungseinheit 22a auf. Die selbstschaltende Kupplungseinheit 22a ist als Freilaufkupplung ausgebildet. Die Kupplungseinheit 22a ist in dem ersten Griffelement 16a angeordnet. Die Kupplungseinheit 22a ist in dem Griffgehäuse 44a des Griffelements 16a angeordnet. Ferner ist die Kupplungseinheit 22a an einem den Schneidelementen 12a, 14a abgewandten Ende des ersten Griffelements 16a angeordnet. Die selbstschaltende Kupplungseinheit 22a ist in zumindest einem Betriebszustand, in welchem die Antriebseinheit 20a deaktiviert ist, zu einer Entkopplung der Antriebseinheit 20a vorgesehen. Die selbstschaltende Kupplungseinheit 22a ist zu einer Realisierung eines vollständigen Handbetriebs dazu vorgesehen die Antriebseinheit 20a zu entkoppeln. Die Kupplungseinheit 22a weist ein inneres Drehelement 46a und ein äußeres Drehelement 48a auf. Ferner weist die Kupplungseinheit 22a mehrere Klemmkörper 24a auf. Die Klemmkörper 24a sind zwischen dem inneren Drehelement 46a und dem äußeren Drehelement 48a angeordnet. Die Klemmkörper 24a sind in Umfangrichtung hintereinander um das innere Drehelement 46a angeordnet. Die Klemmkörper 24a sind als Kugel ausgebildet. Grundsätzlich wäre jedoch auch eine andere, einem Fachmann als sinnvoll erscheinende Ausbildung der Klemmkörper 24a denkbar. Das innere Drehelement 46a weist mehrere in Umfangsrichtung aufeinanderfolgende Rampen 49a auf. Eine Anzahl an Rampen 49a entspricht dabei einer Anzahl Klemmkörper 24a. Die Klemmkörper 24a sind beweglich zwischen den Rampen 49a angeordnet, wobei bei einer Drehung des inneren Drehelements 46a eine Mitnahme der Klemmkörper 24a erfolgt. Wird das innere Drehelement 46a in Umfangsrichtung entgegen einer Rampensteigung angetrieben, rollen die Klemmkörper 24a die Rampen 49a nach oben und werden gegen das äußere Drehelement 48a gedrückt. Es erfolgt eine Drehmitnahme des äußeren Drehelements 48a. Die Kupplungseinheit 22a ist in diesem Zustand geschlossen, wie dies in der Figur 5 dargestellt ist. Wird dagegen das äußere Drehelement 48a angetrieben, unabhängig von einer Drehrichtung, bleiben die Klemmkörper 24a in einem Tal der Rampen 49a und sind zu dem äußeren Drehelement 48a beabstandet. Es erfolgt keine Drehmitnahme. Die Kupplungseinheit 22a ist in diesem Zustand geöffnet, wie dies in der Figur 6 dargestellt ist. Das innere Drehelement 46a der Kupplungseinheit 22a ist von der Antriebseinheit 20a antreibbar ausgebildet. Auf das innere Drehelement 46a der Kupplungseinheit 22a ist ein Zahnrad der Getriebeeinheit 38a aufgepresst. Das innere Drehelement 46a wird über die Getriebeeinheit 38a von der Antriebseinheit 20a angetrieben. Die Getriebeeinheit 38a und die Antriebseinheit 20a bilden eine Antriebsseite der Kupplungseinheit 22a. Die Antriebseinheit 20a und die Getriebeeinheit 38a sind räumlich zwischen den Schneidelementen 12a, 14a und der selbstschaltenden Kupplungseinheit 22a angeordnet.

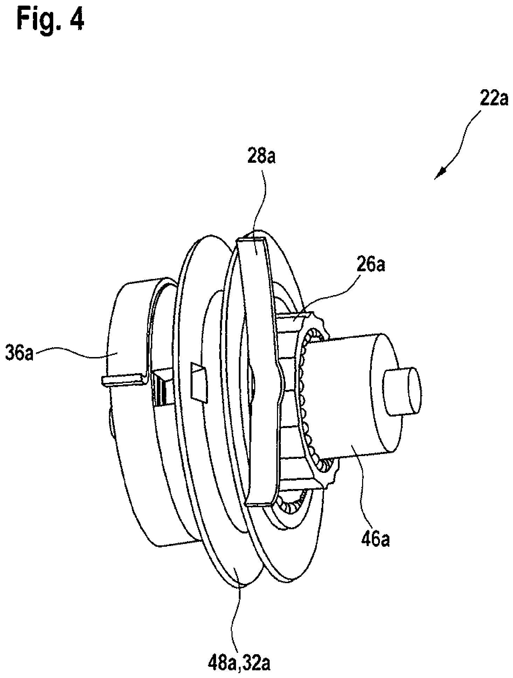

Die selbstschaltende Kupplungseinheit 22a weist einen die Klemmkörper 24a aufnehmenden Käfig 26a auf. Der Käfig 26a nimmt die Klemmkörper 24a in voneinander getrennten Aufnahmebereichen auf. Der Käfig 26a dient zu einer Positionierung und Führung der Klemmkörper 24a in Umfangsrichtung. Der Käfig 26a ist dazu vorgesehen, die Klemmkörper 24a in Umfangsrichtung zueinander zu beabstanden und gleichmäßig zu verteilen. Der Käfig 26a ist teilweise ringförmig ausgebildet. Der Käfig 26a ist auf dem inneren Drehelement 46a der Kupplungseinheit 22a gelagert. Ferner weist die Kupplungseinheit 22a ein Bremselement 28a auf, welches zu einem Abbremsen des Käfigs 26a vorgesehen ist. Das Bremselement 28a ist dazu vorgesehen, eine Trägheit des Käfigs 26a zu erhöhen. Das Bremselement 28a ist dazu vorgesehen, ein ungewolltes verdrehen des Käfigs 26a zu verhindern. Das Bremselement 28a ist dazu vorgesehen, ein Verdrehen des Käfigs 26a bis zu einer definierten Krafteinwirkung zu unterbinden. Das Bremselement 28a ist als ein Federelement ausgebildet. Das Bremselement 28a greift in einem Betrieb in Ausnehmungen auf einer Außenseite des Käfigs 26a ein. Der Käfig 26a weist dazu auf einer Außenseite mehrere, in Umfangsrichtung aufeinanderfolgende Ausnehmungen auf. Das Bremselement 28a ist in dem Griffgehäuse 44a des Griffelements 16a befestigt und drückt mit einer definierten Kraft gegen den Käfig 26a. Das Bremselement 28a ist mit seinen beiden Enden in dem Griffgehäuse 44a des Griffelements 16a befestigt, wobei eine freie Mitte des Bremselements 28a gegen den Käfig 26a drückt (Figur 3, 4).

Ferner weist die Schneidevorrichtung 10a eine von der Antriebseinheit 20a antreibbare Seilwinde 32a auf. Die Seilwinde 32a ist als eine teilweise hohlzylindrische Seiltrommel ausgebildet. Die Seilwinde 32a ist in dem ersten Griffelement 16a angeordnet. Die Seilwinde 32a ist in dem Griffgehäuse 44a des Griffelements 16a angeordnet. Die Seilwinde 32a ist auf einer den Schneidelementen 12a, 14a abgewandten Seite der Kupplungseinheit 22a angeordnet. Die selbstschaltende Kupplungseinheit 22a ist teilweise in die Seilwinde 32a integriert. Die Kupplungseinheit 22a wird teilweise von der Seilwinde 32a umgriffen. Die Seilwinde 32a ist einstückig mit dem äußeren Drehelement 48a der Kupplungseinheit 22a ausgebildet. Die Seilwinde 32a bildet das äußere Drehelement 48a der Kupplungseinheit 22a aus. Ferner bildet die Seilwinde 32a eine Abtriebsseite der Kupplungseinheit 22a. Die Schneidevorrichtung 10a weist zudem ein auf der Seilwinde 32a aufgewickeltes Seil 34a auf. Das Seil 34a ist zwischen den zwei Griffelementen 16a, 18a aufgespannt. Das Seil 34a ist an einem den Schneidelementen 12a, 14a abgewandten Ende des zweiten Griffelements 18a mit dem Griffelement 18a fest verbunden. An dem ersten Griffelement 16a ist das Seil 34a variabel auf der Seilwinde 32a aufgewickelt, wobei ein Ende des Seils 34a ebenfalls fest mit der Seilwinde 32a verbunden ist. Über die Seilwinde 32a kann eine freie Länge des Seils 34a variiert werden (Figur 3, 4).

Des Weiteren weist die Schneidevorrichtung 10a ein mit der Seilwinde 32a verbundenes Federelement 36a auf. Das Federelement 36a ist als eine Spiralfeder ausgebildet. Das Federelement 36a ist in dem ersten Griffelement 16a angeordnet. Das Federelement 36a ist in dem Griffgehäuse 44a des Griffelements 16a angeordnet. Das Federelement 36a ist auf einer den Schneidelementen 12a, 14a abgewandten Seite der Seilwinde 32a angeordnet. Ein Ende des Federelements 36a ist fest mit dem Griffgehäuse 44a des Griffelements 16a ausgebildet und ein Ende ist fest mit der Seilwinde 32a ausgebildet. Das Federelement 36a ist zu einer Spannung des Seils 34a vorgesehen. Das Federelement 36a ist dazu vorgesehen, eine Spannung des Seils 34a zu gewährleisten. Dazu ist das Federelement 36a dazu vorgesehen, die Seilwinde 32a mit einer Kraft in Umfangsrichtung zu beaufschlagen. Das Federelement 36a ist dazu vorgesehen, über die Seilwinde 32a eine Zugkraft auf das Seil 34a zu wirken. Insbesondere soll über das Federelement 36a das Seil 34a auf Spannung gehalten werden. Das Federelement 36a weist eine Federkraft F_{VS} auf, die geringer ist, als eine Federkraft F_{OS} der Öffnungsfeder 50a (Figur 2, 4).

Ferner weist die Schneidevorrichtung 10a eine Steuereinheit 52a auf. Die Steuereinheit 52a ist in dem ersten Griffelement 16a angeordnet. Die Steuereinheit 52a ist in dem Griffgehäuse 44a des Griffelements 16a angeordnet. Die Steuereinheit 52a ist zu einer Ansteuerung der Antriebseinheit 20a vorgesehen. Grundsätzlich kann sowohl eine reine Steuerung der Antriebseinheit 20a, als auch eine Regelung der Antriebseinheit 20a erfolgen. Die Steuereinheit 52a versorgt hierzu die Antriebseinheit 20a mit Energie. Die Steuereinheit 52a ist zwischen der Antriebseinheit 20a und dem Drehgelenk 42a angeordnet. Die Steuereinheit 52a ist mit einer Energiespeichereinheit 54a verbunden. Über die Energiespeichereinheit 54a kann die Antriebseinheit 20a von der Steuereinheit 52a mit Energie versorgt werden. Die Energiespeichereinheit 54a weist zwei Akkuzellen 56a, 58a auf. Die Akkuzellen 56a, 58a sind jeweils von Lithium-Ionen-Zellen gebildet. Grundsätzlich wäre jedoch auch eine andere, einem Fachmann als sinnvoll erscheinende Ausbildung der Akkuzellen 56a, 58a denkbar. Die erste Akkuzelle 56a ist in dem ersten Griffelement 16a angeordnet. Die erste Akkuzelle 56a ist in dem Griffgehäuse 44a des Griffelements 16a angeordnet. Die erste Akkuzelle 56a ist direkt neben der Steuereinheit 52a angeordnet. Die zweite Akkuzelle 58a ist in dem zweiten Griffelement 18a angeordnet. Die zweite Akkuzelle 58a ist in einem Griffgehäuse 60a des zweiten Griffelements 18a angeordnet. Die Akkuzellen 56a, 58a sind jeweils mit der Steuereinheit 52a verbunden (Figur 1, 2).

Die Schneidevorrichtung 10a weist ferner einen Kraftsensor 40a. Der Kraftsensor 40a ist in dem zweiten Griffelement 18a der Griffelemente 16a, 18a integriert. Der Kraftsensor 40a ist in dem Griffgehäuse 60a des zweiten Griffelements 18a angeordnet. Ferner ist der Kraftsensor 40a mit einem Griffbereich 62a des zweiten Griffelements 18a gekoppelt. Der Griffbereich 62a bildet an dem zweiten Griffelement 18a eine Auflagefläche 64a für eine Hand, insbesondere die Finger, des Bedieners. Der Griffbereich 62a ist gegenüber dem Griffgehäuse 60a begrenzt um eine Achse 66a schwenkbar. Der Griffbereich 62a wird an einem freien Ende mittels einer Feder 68a gegen das Griffgehäuse 60a abgestützt. Die Feder 68a bildet einen Teil des Kraftsensors 40a. Bei einem Schließen der Schneidevorrichtung 10a wird der Griffbereich 62a gegen eine Federkraft der Feder 68a mit dem freien Ende gegen das Griffgehäuse 60a verschwenkt. Der Kraftsensor 40a ist zwischen dem Griffgehäuse 60a und dem Griffbereich 62a angeordnet. Der Kraftsensor 40a erfasst eine zwischen dem Griffgehäuse 60a und dem Griffbereich 62a wirkende Kraft. So kann mittels dem Kraftsensor 40a vorteilhaft eine auf das zweite Griffelement 18a, relativ zu dem ersten Griffelement 16a wirkende Kraft sensiert werden. Der Kraftsensor 40a weist die Feder 68a und einen Schalter 72a auf. Der Schalter 72a besteht aus zwei Kontaktelementen, wobei ein erstes Kontaktelement an dem freien Ende des Griffbereichs 62a angeordnet ist und das zweite Kontaktelement, dem ersten Kontaktelement gegenüberliegend an dem Griffgehäuse 60a angeordnet ist. Der Schalter 72a schließt bei einer definierten Annäherung des Griffbereichs 62a mit dem freien Ende gegen das Griffgehäuse 60a. Grundsätzlich wäre jedoch auch denkbar, dass der Schalter 72a als Druckschalter ausgebildet ist, der bei einer Berührung auslöst. Dadurch könnte auf ein zweites Kontaktelement verzichtet werden. In Verbindung mit einer definierten Federkraft der Feder 68a kann eine Kraft definiert werden, bei welcher der Schalter 72a des Kraftsensors 40a schließt. Dadurch kann ein besonders kostengünstiger und konstruktiv einfacher Kraftsensor 40a bereitgestellt werden. Grundsätzlich wäre auch eine alternative, einem Fachmann als sinnvoll erscheinende Ausbildung des Kraftsensors 40a denkbar. Beispielsweise wäre denkbar, dass der Kraftsensor 40a einen Piezokristall aufweist, welcher zwischen dem Griffbereich 62a und dem Griffgehäuse 60a angeordnet ist. Dadurch könnte explizit eine aktuell anliegende Kraft erfasst werden. Hierdurch könnte eine Auslösekraft des Kraftsensors 40a frei durch eine Software definiert werden (Figur 2).

Der Kraftsensor 40a ist mit der Steuereinheit 52a verbunden. Die Steuereinheit 52a ist zu einer Steuerung der Antriebseinheit 20a abhängig von einem Signal des Kraftsensors 40a vorgesehen. Die Steuereinheit 52a ist dazu vorgesehen, die Antriebseinheit 20a bei Überschreibung eines definierten Messwerts des Kraftsensors 40a die Antriebseinheit 20a zu aktivieren. Die Steuereinheit 52a ist dazu vorgesehen, die Antriebseinheit 20a bei einem Schließen des Schalters 72a des Kraftsensors 40a die Antriebseinheit 20a zu aktivieren. Ferner ist die Steuereinheit 52a dazu vorgesehen, die Antriebseinheit 20a bei einem Öffnen des Schalters 72a des Kraftsensors 40a zu stoppen.

Des Weiteren weist die Schneidevorrichtung 10a einen Wegsensor 70a auf. Der Wegsensor 70a ist als Hallsensor ausgebildet. Grundsätzlich wäre jedoch auch eine andere, einem Fachmann als sinnvoll erscheinende Ausbildung des Wegsensors 70a denkbar. Der Wegsensor 70a ist in dem Drehgelenk 42a der Schneidevorrichtung 10a angeordnet. Der Wegsensor 70a ist dazu vorgesehen, eine Winkellage der Griffelemente 16a, 18a relativ zueinander zu detektieren. Der Wegsensor 70a weist dazu zwei mit dem zweiten Griffelement 18a verbundene Magneten auf, die in dem Drehgelenk 42a mit dem zweiten Griffelement 18a verbunden sind. Ferner weist der Wegsensor 70a ein Sensorelement auf. Das Sensorelement ist in dem Drehgelenk 42a mit dem ersten Griffelement 16a verbunden. Liegt das Sensorelement direkt über dem ersten Magneten, ist die Schneidevorrichtung 10a vollständig geöffnet. Liegt das Sensorelement über dem zweiten Magneten, ist die Schneidevorrichtung 10a vollständig geschlossen. Die Schneidevorrichtung 10a befindet sich in dieser Stellung in einer Endposition (Figur 2).

Der Wegsensor 70a ist mit der Steuereinheit 52a verbunden. Die Steuereinheit 52a ist dazu vorgesehen, mittels eines Messwerts des Wegsensors 70a, die Antriebseinheit 20a bei Erreichen einer Endposition der Griffelemente 16a, 18a relativ zueinander bzw. in einem vollständig geschlossenen Zustand der Schneidevorrichtung 10a zu deaktivieren.

Bei einem Betrieb der Schneidevorrichtung 10a kann zwischen einem manuellen Modus der Schneidevorrichtung 10a, bei welchem eine komplette Schneidekraft F_{cut} von einem Bediener aufgebracht wird, und einem unterstützten Modus, bei welchem ein Teil der Schneidekraft F_{cut} zudem von der Antriebseinheit 20a aufgebracht wird, unterschieden werden.

Nachfolgend wird ein Verfahren zu einem Betrieb der Schneidevorrichtung 10a beschrieben.

Die Schneidevorrichtung 10a befindet sich ständig in einem Betriebsmodus. Grundsätzlich wäre jedoch auch denkbar, dass die Schneidevorrichtung 10a einen Betriebsschalter aufweist, mittels dem die Schneidevorrichtung 10a aktiviert und deaktiviert werden kann. Alternativ wäre auch denkbar, dass die Schneidevorrichtung 10a beispielsweise durch eine definierte Schließ- und/oder Öffnungsabfolge der Schneidevorrichtung 10a selbst aktiviert werden kann. Eine Deaktivierung wäre beispielsweise zeitabhängig denkbar.

Möchte ein Bediener während eines Betriebs ein Schneidevorgang durchführen, wie beispielsweise an einem Ast, muss er das zu schneidende Objekt zwischen den Schneidelementen 12a, 14a der Schneidevorrichtung 10a positionieren. Anschließend können die Schneidelemente 12a, 14a, insbesondere wie bei einer herkömmlichen Gartenschere, durch Zusammendrücken der Griffelemente 16a, 18a relativ zueinander, geschlossen werden. Die Griffelemente 16a, 18a werden in einem Schritt 118a von einem Bediener manuell zusammengedrückt. Anschließend wird in einem weiteren Schritt 120a von der Steuereinheit 52a ein Signal des Kraftsensors 40a überwacht. Die Steuereinheit 52a überwacht eine für einen Schneidevorgang benötigte Kraft. Die Steuereinheit 52a überprüft, ob der Schalter 72a des Kraftsensors 40a geöffnet oder geschlossen ist.

Ist eine für den Schneidevorgang benötigte Kraft eines Bedieners Fᵤₛₑᵣ geringer, als eine von dem Kraftsensor 40a definierte Kraft, welche zu einem Schließen des Schalters 72a benötigt wird, wird die Schneidevorrichtung 10a in einem manuellen Modus verwendet. Ist der Schalter 72a geöffnet, wird in der folgenden Verzweigung 122a der Schritt 120a wiederholt. In dem manuellen Modus werden die Griffelemente 16a, 18a manuell von einem Bediener gegeneinander verschwenkt. In dem manuellen Modus wird das Seil 34a auf der Seilwinde 32a mittels des Federelements 36a aufgewickelt. Da eine Kraft hierbei von einer Abtriebsseite auf die Kupplungseinheit 22a wirkt, befindet sich die Kupplungseinheit 22a in einem geöffneten Zustand. Die Seilwinde 32a kann daher ohne einen Widerstand der Getriebeeinheit 38a und der Antriebseinheit 20a verdreht werden. Das Seil 34a wird in diesem Zustand von dem Federelement 36a auf Spannung gehalten. Reduziert ein Bediener eine Kraft auf die Griffelemente 16a, 18a, weil beispielsweise ein Schneidevorgang beendet ist, werden die Griffelemente 16a, 18a mittels der Öffnungsfeder 50a auseinander gedrückt und die Schneidevorrichtung 10a wird geöffnet. Das Seil 34a wird dabei entgegen der Federkraft des Federelements 36a von der Seilwinde 32a abgewickelt.

Ist eine Energiespeichereinheit 54a der Schneidevorrichtung 10a leer, kann die Schneidevorrichtung 10a in einem manuellen Modus verwendet werden, wobei die Antriebseinheit 20a auch bei einer Überschreitung einer von dem Kraftsensor 40a definierten Kraft deaktiviert bleibt. Es erfolgt keine Aktivierung der Antriebseinheit 20a wodurch auch die Kupplungseinheit 22a geöffnet bleibt.

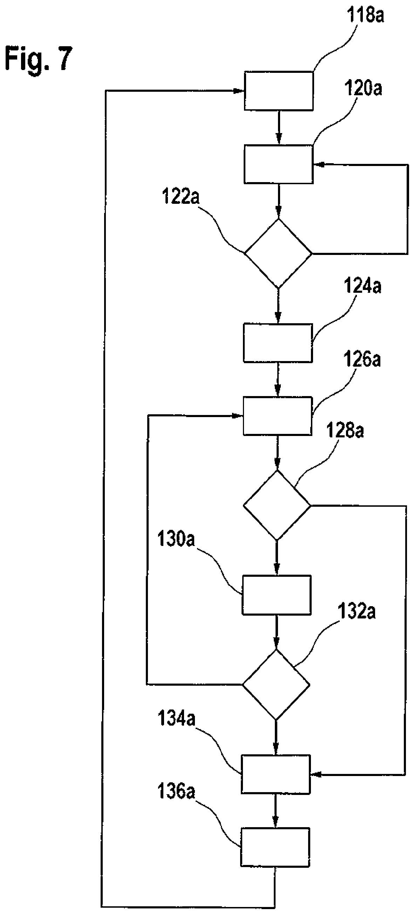

Ist eine für den Schneidevorgang benötigte Kraft eines Bedieners Fᵤₛₑᵣ größer, als eine von dem Kraftsensor 40a definierte Kraft, welche zu einem Schließen des Schalters 72a benötigt wird, wird die Schneidevorrichtung 10a in einem unterstützen Modus verwendet. Ein Wechsel von einem manuellen Modus in einen unterstützten Modus erfolgt grundsätzlich während eines Schneidevorgangs. In dem manuellen Modus werden die Griffelemente 16a, 18a manuell von einem Bediener gegeneinander verschwenkt. Wird ein hartes Objekt geschnitten, müssen die Griffelemente 16a, 18a mit hoher Kraft von einem Bediener gegeneinander gedrückt werden. Wird eine so hohe Kraft aufgebracht, dass der Schalter 72a gegen eine Federkraft F_{gs} schließt, wird dies von der Steuereinheit 52a sensiert. Die Steuereinheit 52a aktiviert daraufhin die Antriebseinheit 20a. Wird in der Verzweigung 122a festgestellt, dass der Schalter 72a geschlossen ist, wird die Antriebseinheit 20a über die Steuereinheit 52a in einem Schritt 124a aktiviert. Die Antriebseinheit 20a wird demnach bei Überschreitung einer definierten Bedienerkraft einem Schließmechanismus der Schneidevorrichtung 10a zugeschalten. Die Antriebseinheit 20a treibt daraufhin über die Getriebeeinheit 38a das innere Drehelement 46a der Kupplungseinheit 22a an. Die Antriebseinheit 20a wird in Antriebsrichtung 41a angetrieben. Die Kupplungseinheit 22a wird geschlossen und treibt die Seilwinde 32a an. Das Seil 34a wird auf der Seilwinde 32a aufgewickelt. Die Griffelemente 16a, 18a werden nun zusätzlich zu einer Bedienerkraft Fᵤₛₑᵣ durch eine Antriebskraft Fₐₛ zusammengedrückt bzw. zusammengezogen. Die Antriebseinheit 20a beaufschlagt in diesem Betriebszustand die Schneidelemente 12a, 14a bei einer teilweise manuellen Bewegung mit einer zusätzlichen Kraft. Die Antriebskraft Fₐₛ wirkt hierbei über die Seilwinde 32a an dem Seil 34a. Anschließend wird in einem weiteren Schritt 126a über die Steuereinheit 52a ein Signal des Wegsensors 70a überprüft. Es wird über den Wegsensor 70a eine Relativposition der Griffelemente 16a, 18a zueinander überprüft. Wird in einer Verzweigung 128a festgestellt, dass eine aktuelle Position von einer Endposition abweicht, wird in einem weiteren Schritt 130a überprüft, ob der Schalter 72a des Kraftsensors 40a geöffnet oder geschlossen ist. Ist der Schalter 72a geschlossen, wird über eine Verzweigung 132a der Schritt 126a wiederholt. Ist der Schalter 72a geöffnet, wird über eine Verzweigung 132a die Antriebseinheit 20a in einem Schritt 134a selbsttätig gestoppt. Die Antriebseinheit 20a wird bei einem Öffnen des Schalters 72a des Kraftsensors 40a gestoppt. Wird über den Kraftsensor 40a, durch Öffnen des Schalters 72a, erfasst, dass eine Kraft eines Bedieners reduziert wird, wird die Antriebseinheit 20a über die Steuereinheit 52a gestoppt. Wird in einer Verzweigung 128a festgestellt, dass eine aktuelle Position der Schneidevorrichtung 10a einer Endposition entspricht, wird in dem Schritt 134a die Antriebseinheit 20a selbsttätig gestoppt. Wird über den Wegsensor 70a erfasst, dass sich die Schneidevorrichtung 10a in einer Endposition bzw. in einem geschlossen Zustand befindet, wird die Antriebseinheit 20a über die Steuereinheit 52a gestoppt. Nach einem Stoppen der Antriebseinheit 20a wird die Antriebseinheit 20a in einem weiteren Schritt 136a zu einer Öffnung der Kupplungseinheit 22a kurzzeitig entgegen einer Antriebsrichtung 41a angetrieben. Die Antriebseinheit 20a wird dabei von der Steuereinheit 52a lediglich über einen kleinen Winkelbereich entgegen einer Antriebsrichtung 41a angetrieben und anschließend deaktiviert. Nach einer Deaktivierung der Antriebseinheit 20a, wird das Verfahren von vorne begonnen (Figur 7).

Grundsätzlich wäre jedoch auch denkbar, dass die Kupplungseinheit 22a ein Ausbleiben einer Drehbewegung der Antriebseinheit 20a selbsttätig entkoppelt wird. Dabei wäre insbesondere denkbar, dass die Schneidevorrichtung 10a, wenn eine Drehbewegung der Antriebseinheit 20a stoppt, durch die Öffnungsfeder 50a zumindest teilweise geöffnet und dabei die Seilwinde 32a über das Seil 34a teilweise entgegen einer Antriebsrichtung 41a der Antriebseinheit 20a verdreht wird. Dabei würde eine Verdrehung des äußeren Drehelements 48a zu einem inneren Drehelement 46a der Kupplungseinheit 22a stattfinden und die Kupplungseinheit 22a würde geöffnet werden. Grundsätzlich wäre jedoch auch eine andere, einem Fachmann als sinnvoll erscheinende Methode zur Öffnung der Kupplungseinheit 22a denkbar.

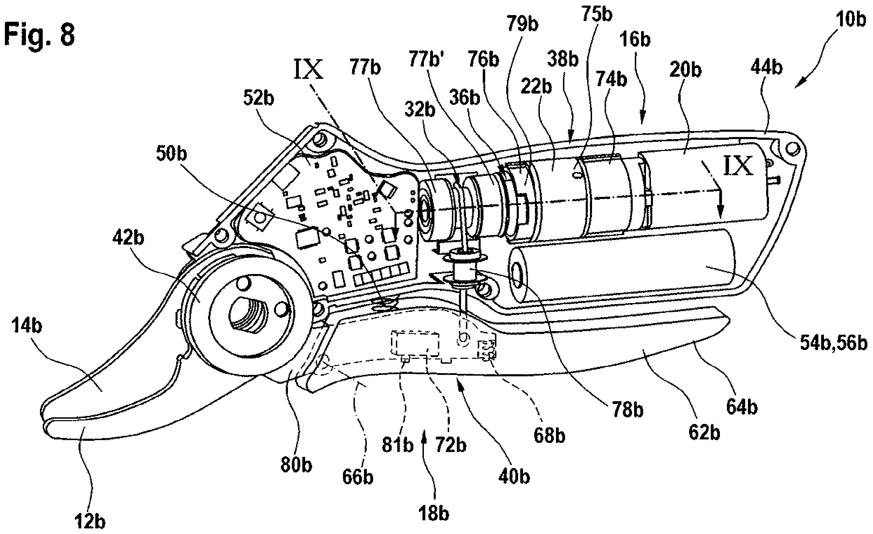

In den Figuren 8 bis 17 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 8 bis 17 ist der Buchstabe a durch die Buchstaben b bis d ersetzt.

Figur 8 zeigt eine alternative erfindungsgemäße Schneidevorrichtung 10b. Die Schneidevorrichtung 10b ist als eine Gartenschneidevorrichtung ausgebildet. Die Schneidevorrichtung 10b ist als eine Gartenschere ausgebildet. Die Schneidevorrichtung 10b weist zwei relativ zueinander bewegbare Schneidelemente 12b, 14b auf. Ferner weist die Schneidevorrichtung 10b zwei relativ zueinander bewegbare Griffelemente 16b, 18b auf. Die Griffelemente 16b, 18b sind über ein Drehgelenk 42b verschwenkbar zueinander ausgebildet. Des Weiteren ist nahe dem Drehgelenk 42b eine Öffnungsfeder 50b angeordnet.

Ferner weist die Schneidevorrichtung 10b eine Antriebseinheit 20b auf. Die Antriebseinheit 20b ist in dem ersten Griffelement 16b angeordnet. Die Antriebseinheit 20b ist in einem Griffgehäuse 44b des Griffelements 16b angeordnet. Die Antriebseinheit 20b ist an einem den Schneidelementen 12b, 14b abgewandten Ende des ersten Griffelements 16b angeordnet.

Des Weiteren weist die Schneidevorrichtung 10b eine Getriebeeinheit 38b auf. Die Getriebeeinheit 38b ist in dem ersten Griffelement 16b angeordnet. Die Getriebeeinheit 38b ist in dem Griffgehäuse 44b des Griffelements 16b angeordnet. Die Getriebeeinheit 38b ist auf einer den Schneidelementen 12b, 14b zugewandten Seite der Antriebseinheit 20b angeordnet. Die Getriebeeinheit 38b ist direkt von der Antriebseinheit 20b antreibbar. Die Getriebeeinheit 38b wird direkt von einem Ritzel der Antriebseinheit 20b angetrieben. Die Getriebeeinheit 38b weist zwei Planetengetriebe 74b, 76b auf. Eine erstes Planetengetriebe 74b folgt direkt auf die Antriebseinheit 20b. Zwischen dem ersten Planetengetriebe 74b und dem zweiten Planetengetriebe 76b ist eine selbstschaltende Kupplungseinheit 22b angeordnet. Die Getriebeeinheit 38b weist demnach zumindest zwei Getriebestufen auf, zwischen welchen die selbstschaltende Kupplungseinheit 22b angeordnet ist. Die Getriebeeinheit 38b weist vier Getriebestufen auf, wobei drei Getriebestufen, entlang eines Antriebsflusses betrachtet, vor der Kupplungseinheit 22b angeordnet sind und eine Getriebestufe hinter der Kupplungseinheit 22b angeordnet ist. Die Kupplungseinheit 22b ist räumlich und entlang eines Antriebsflusses betrachtet zwischen den Planetengetrieben 74b, 76b der Getriebeeinheit 38b angeordnet (Figur 8).

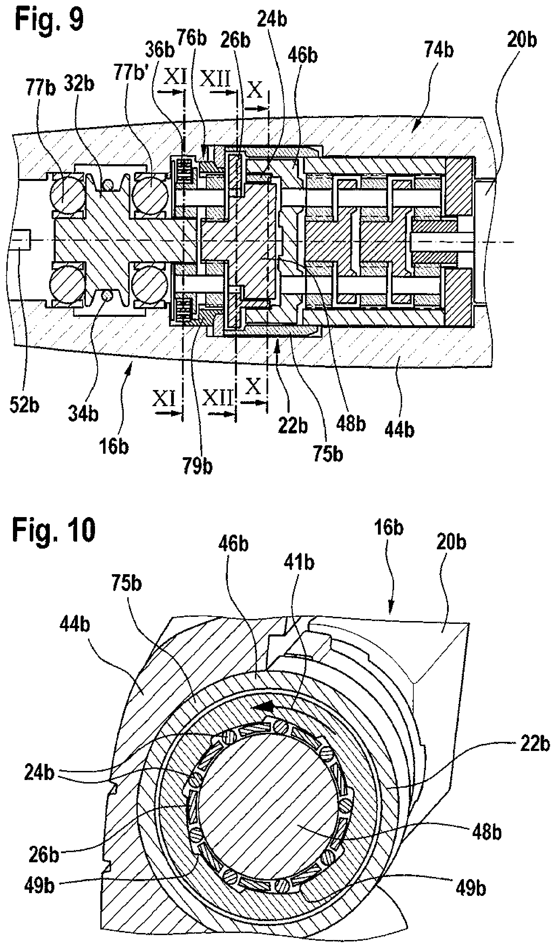

Die Schneidevorrichtung 10b weist die selbstschaltende Kupplungseinheit 22b auf. Die selbstschaltende Kupplungseinheit 22b ist als Freilaufkupplung ausgebildet. Die Kupplungseinheit 22b ist in dem ersten Griffelement 16b angeordnet. Die Kupplungseinheit 22b ist in dem Griffgehäuse 44b des Griffelements 16b angeordnet. Die Kupplungseinheit 22b weist ein äußeres Drehelement 46b und ein inneres Drehelement 48b auf. Ferner weist die Kupplungseinheit 22b mehrere Klemmkörper 24b auf. Die Klemmkörper 24b sind zwischen dem äußeren Drehelement 46b und dem inneren Drehelement 48b angeordnet. Die Klemmkörper 24b sind in Umfangsrichtung hintereinander um das innere Drehelement 48b angeordnet. Die Klemmkörper 24b sind als Zylinder ausgebildet. Grundsätzlich wäre jedoch auch eine andere, einem Fachmann als sinnvoll erscheinende Ausbildung der Klemmkörper 24b denkbar. Das äußere Drehelement 46b weist an seiner Innenseite mehrere in Umfangsrichtung aufeinanderfolgende Rampen 49b auf. Eine Anzahl an Rampen 49b entspricht dabei einer Anzahl Klemmkörper 24b. Die Klemmkörper 24b sind beweglich zwischen den Rampen 49b angeordnet, wobei bei einer Drehung des äußeren Drehelements 46b eine Mitnahme der Klemmkörper 24b erfolgt. Wird das äußere Drehelement 46b in Umfangsrichtung entgegen einer Rampensteigung - in Antriebsrichtung 41b - angetrieben, rollen die Klemmkörper 24b in einen enger zulaufenden Bereich zwischen dem äußeren Drehelement 46b und dem inneren Drehelement 48b und werden gegen das innere Drehelement 48b gedrückt. Es erfolgt eine Drehmitnahme des inneren Drehelements 48b. Die Kupplungseinheit 22b ist in diesem Zustand geschlossen. Wird dagegen das innere Drehelement 48b angetrieben, unabhängig von einer Drehrichtung, bleiben die Klemmkörper 24b in einem Tal der Rampen 49b und sind frei zwischen den Drehelementen 46b, 48b angeordnet. Es erfolgt keine Drehmitnahme. Die Kupplungseinheit 22b ist in diesem Zustand geöffnet, wie dies in der Figur 10 dargestellt ist. Wird das äußere Drehelement 46b entgegen einer Antriebsrichtung 41b angetrieben, werden die Klemmkörper 24b in das Tal der Rampen 49b bewegt und sind ebenfalls frei zwischen den Drehelementen 46b, 48b angeordnet. Das äußere Drehelement 46b der Kupplungseinheit 22b ist von der Antriebseinheit 20b antreibbar ausgebildet. Das äußere Drehelement 46b der Kupplungseinheit 22b bildet einen Planetenträger des ersten Planetengetriebes 74b. Das äußere Drehelement 46b wird über das erste Planetengetriebe 74b von der Antriebseinheit 20b angetrieben. Das erste Planetengetriebe 74b und die Antriebseinheit 20b bilden eine Antriebsseite der Kupplungseinheit 22b. Das innere Drehelement 48b der Kupplungseinheit 22b bildet ein Sonnenrad des zweiten Planetengetriebes 76b. Das zweite Planetengetriebe 76b bildet eine Abtriebsseite der Kupplungseinheit 22b.

Die selbstschaltende Kupplungseinheit 22b weist einen die Klemmkörper 24b aufnehmenden Käfig 26b auf. Der Käfig 26b ist teilweise scheibenförmig ausgebildet. Auf einem scheibenförmigen Grundkörper des Käfigs 26b sind mehrere axial auskragende, kreissegmentförmige Stege aufgebracht, welche sich zwischen die Klemmkörper 24b erstrecken. Der Käfig 26b ist auf dem inneren Drehelement 48b der Kupplungseinheit 22b gelagert.

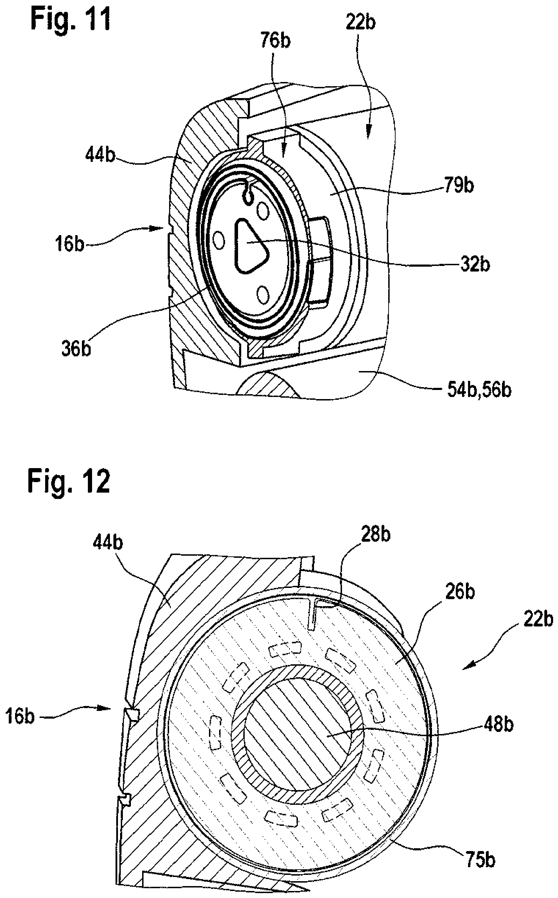

Ferner weist die Kupplungseinheit 22b ein Bremselement 28b auf, welches zu einem Abbremsen des Käfigs 26b vorgesehen ist. Das Bremselement 28b ist als ein Federelement ausgebildet. Das Bremselement 28b ist als eine Spiralfeder ausgebildet. Das Bremselement 28b ist mit einem Ende fest in einer Ausnehmung auf einer Außenseite des Käfigs 26b angeordnet. Das Bremselement 28b erstreckt sich in Umfangsrichtung spiralförmig um den Käfig 26b. Ein freies Ende stützt sich dabei an einem Gehäuse 75b der Kupplungseinheit 22b ab, wobei das freie Ende mittels einer Federkraft gegen das Gehäuse 75b gedrückt wird und eine Bremswirkung erzeugt (Figur 12).

Ferner weist die Schneidevorrichtung 10b eine von der Antriebseinheit 20b antreibbare Seilwinde 32b auf. Die Seilwinde 32b ist als eine Seiltrommel ausgebildet. Die Seilwinde 32b ist in dem ersten Griffelement 16b angeordnet. Die Seilwinde 32b ist in dem Griffgehäuse 44b des Griffelements 16b angeordnet. Die Seilwinde 32b ist auf beiden Seiten über jeweils ein Kugellager 77a, 77a' in dem Griffgehäuse 44b des Griffelements 16b gelagert. Die Seilwinde 32b ist auf einer den Schneidelementen 12b, 14b zugewandten Seite des zweiten Planetengetriebes 76b angeordnet. Die Seilwinde 32b bildet eine Abtriebsseite der Kupplungseinheit 22b, wobei das zweite Planetengetriebe 76b eine Übersetzung zwischen der Seilwinde 32b und der Kupplungseinheit 22b bewirkt. Durch das zweite Planetengetriebe 76b kann ein auf die Kupplungseinheit 22b wirkendes Drehmoment gering gehalten werden. Die Schneidevorrichtung 10b weist zudem ein auf der Seilwinde 32b aufgewickeltes Seil 34b auf. Das Seil 34b ist in dem ersten Griffelement 16b zudem in einer Führungshülse 78b gelagert. Das Seil 34b ist zwischen den zwei Griffelementen 16b, 18b aufgespannt. Das Seil 34b ist in einem Bereich zwischen dem Drehgelenk 42b und einem den Schneidelementen 12b, 14b abgewandten Ende des zweiten Griffelements 18a mit dem zweiten Griffelement 18a fest verbunden. An dem ersten Griffelement 16a ist das Seil 34a variabel auf der Seilwinde 32a aufgewickelt. Das Seil 34b ist einem Bereich zwischen einem Griffbereich der Griffelemente 16b, 18b und dem Drehgelenk 42b zwischen den Griffelementen 16b, 18b aufgespannt. Dadurch kann vorteilhaft verhindert werden, dass ein Bediener von dem Seil 34b gestört wird (Figur 8, 9).

Des Weiteren weist die Schneidevorrichtung 10b ein mit der Seilwinde 32b verbundenes Federelement 36b auf. Das Federelement 36b ist als eine Spiralfeder ausgebildet. Das Federelement 36b ist in dem ersten Griffelement 16b angeordnet. Das Federelement 36b ist in dem Griffgehäuse 44b des ersten Griffelements 16b angeordnet. Das Federelement 36b ist um einen Planetenträger des zweiten Planetengetriebes 76b angeordnet. Ein Ende des Federelements 36b, ist fest mit einem Gehäuse 79b des zweiten Planetengetriebes 76b verbunden und ein Ende ist fest mit dem Planententräger des zweiten Planetengetriebes 76b ausgebildet. Das Gehäuse 79b des zweiten Planetengetriebes 76b bildet ein Hohlrad des Planetengetriebes 76b aus. Eine Welle der Seilwinde 32b ist drehfest mit dem Planententräger des zweiten Planetengetriebes 76b verbunden. Das Federelement 36b ist zu einer Spannung des Seils 34b vorgesehen (Figur 9, 11).

Ferner weist die Schneidevorrichtung 10b eine Steuereinheit 52b auf. Die Steuereinheit 52b ist mit einer Energiespeichereinheit 54b verbunden. Die Energiespeichereinheit 54a weist eine Akkuzelle 56b auf. Die Akkuzelle 56b ist in dem ersten Griffelement 16b angeordnet. Die Akkuzelle 56b ist in dem Griffgehäuse 44b des Griffelements 16b angeordnet. Die Akkuzelle 56b ist auf einer dem zweiten Griffelement 18b zugewandten Seite der Getriebeeinheit 38b angeordnet.

Die Schneidevorrichtung 10a weist ferner einen Kraftsensor 40b auf. Der Kraftsensor 40b ist in dem zweiten Griffelement 18b der Griffelemente 16b, 18b integriert. Der Kraftsensor 40b ist in einem ersten, fest mit dem Drehgelenk 42b ausgebildeten Hebel 80b des zweiten Griffelements 18b angeordnet. Ferner ist der Kraftsensor 40b mit einem Griffbereich 62b des zweiten Griffelements 18b gekoppelt. Der Griffbereich 62b bildet an dem zweiten Griffelement 18b eine Auflagefläche 64b für eine Hand, insbesondere die Finger, des Bedieners. Der Griffbereich 62b ist gegenüber dem Hebel 80b begrenzt um eine Achse 66b schwenkbar. Der Griffbereich 62b wird an einem freien Ende des Hebels 80b mittels einer Feder 68b gegen den Hebel 80b abgestützt. Die Feder 68b bildet einen Teil des Kraftsensors 40b. Bei einem Schließen der Schneidevorrichtung 10b wird der Griffbereich 62b gegen eine Federkraft der Feder 68b gegen den Hebel 80b verschwenkt. Der Kraftsensor 40b ist zwischen dem Hebel 80b und dem Griffbereich 62b angeordnet. Der Kraftsensor 40a weist die Feder 68b und einen Schalter 72b auf. Der Schalter 72b weist ein Druckelement 81b auf, welches aus dem Hebel 80b hervorsteht. Dem Druckelement 81b des Schalters 72b liegt an dem Griffbereich 62b eine Druckfläche gegenüber, welche zu einer Betätigung des Druckelements 81b vorgesehen ist. Der Schalter 72b schließt bei einem definierten Eindrücken des Druckelements 81b durch die Druckfläche. Grundsätzlich wäre zudem denkbar, dass der Kraftsensor 40b zwischen verschiedenen Graden eines Eindrückens des Druckelements 81b differenzieren kann, um so auf eine genaue aktuell anliegende Kraft rückschließen zu können. Der Kraftsensor 40b ist mit der Steuereinheit 52b verbunden.

Des Weiteren weist die Schneidevorrichtung 10b einen nicht weiter sichtbaren Wegsensor auf. Der Wegsensor ist mit der Steuereinheit 52b verbunden.

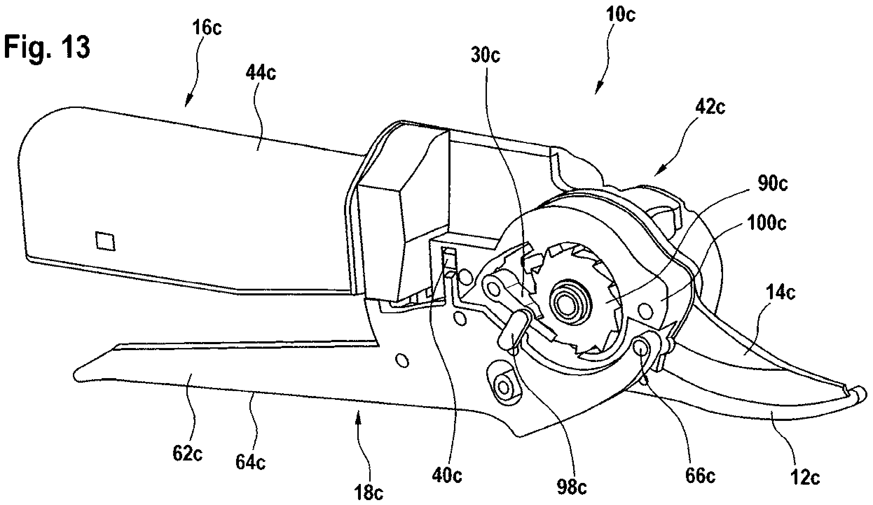

Figur 13 zeigt eine weitere alternative erfindungsgemäße Schneidevorrichtung 10c. Die Schneidevorrichtung 10c ist als eine Gartenschneidevorrichtung ausgebildet. Die Schneidevorrichtung 10c ist als eine Gartenschere ausgebildet. Die Schneidevorrichtung 10c weist zwei relativ zueinander bewegbare Schneidelemente 12c, 14c auf. Ferner weist die Schneidevorrichtung 10c zwei relativ zueinander bewegbare Griffelemente 16c, 18c auf. Die Griffelemente 16c, 18c sind über ein Drehgelenk 42c verschwenkbar zueinander ausgebildet. Die Schneidelemente 12c, 14c sind ebenfalls über das Drehgelenk 42c verschwenkbar zueinander ausgebildet. Das Drehgelenk 42c ist zwischen den Griffelementen 16c, 18c und den Schneidelementen 12c, 14c angeordnet. Des Weiteren ist in dem Drehgelenk 42c eine nicht weiter sichtbare Öffnungsfeder angeordnet.

Das zweite Griffelement 18c ist zweiteilig ausgebildet. Das zweite Griffelement 18c weist einen Grundkörper 100c und einen Griffbereich 62c auf. Der Griffbereich 62c bildet an dem zweiten Griffelement 18c eine Auflagefläche 64c für eine Hand, insbesondere die Finger, des Bedieners. Der Griffbereich 62c ist gegenüber dem Grundkörper 100c begrenzt um eine Achse 66c schwenkbar. Der Grundkörper 100c ist fest mit dem zweiten Schneidelement 14c verbunden. Die nicht weiter sichtbare Öffnungsfeder greift an dem Griffbereich 62c des zweiten Griffelements 18c an.

Ferner weist die Schneidevorrichtung 10c eine Antriebseinheit 20c auf. Die Antriebseinheit 20c ist in dem ersten Griffelement 16c angeordnet. Die Antriebseinheit 20c ist in einem Griffgehäuse 44c des Griffelements 16c angeordnet. Die Antriebseinheit 20c ist an einem den Schneidelementen 12c, 14c abgewandten Ende des ersten Griffelements 16c angeordnet.

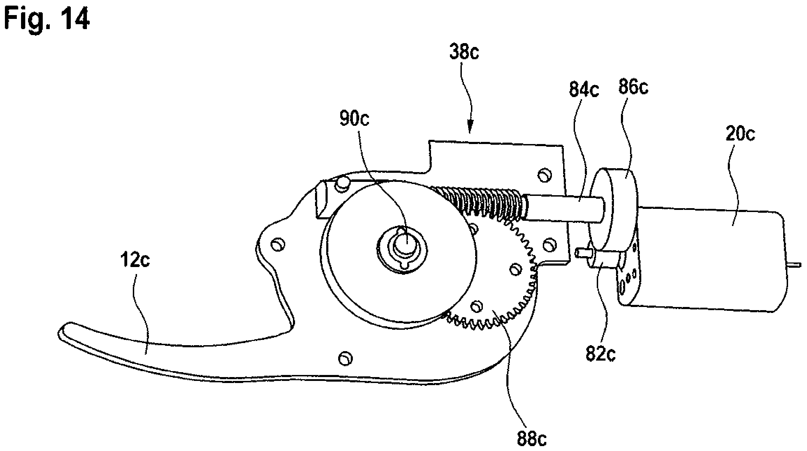

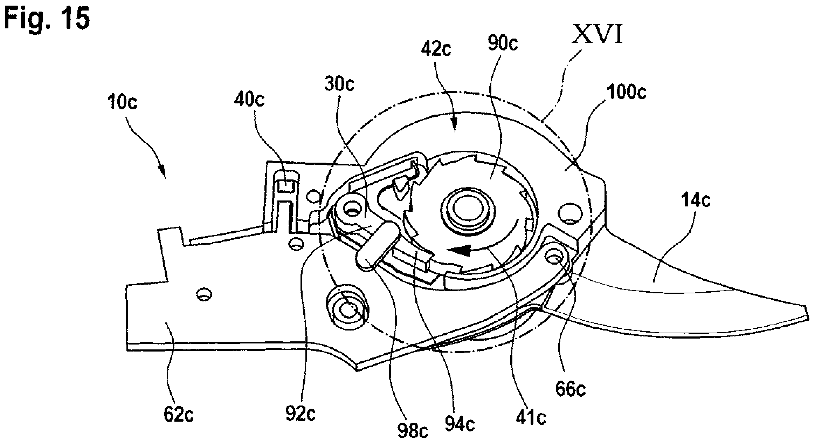

Des Weiteren weist die Schneidevorrichtung 10c eine Getriebeeinheit 38c auf. Die Getriebeeinheit 38c ist in dem ersten Griffelement 16c angeordnet. Die Getriebeeinheit 38c ist in dem Griffgehäuse 44c des Griffelements 16c angeordnet. Die Getriebeeinheit 38c ist auf einer den Schneidelementen 12c, 14c zugewandten Seite der Antriebseinheit 20c angeordnet. Die Getriebeeinheit 38c ist direkt von einem Ritzel 82c der Antriebseinheit 20c antreibbar. Das Ritzel 82c der Antriebseinheit 20c kämmt ein auf einer Spindel 84c aufgepresstes Zahnrad 86c. Die Spindel 84c kämmt ein weiteres Zahnrad 88c, welches eine senkrecht zu der Spindel 84c verlaufende Drehachse aufweist. Das weitere Zahnrad 88c kämmt ein Sperrrad 90c einer selbstschaltenden Kupplungseinheit 22c. Das Sperrrad 90c ist über die Getriebeeinheit 38c von der Antriebseinheit 20c antreibbar. Das Sperrrad 90c ist in dem Drehgelenk 42c angeordnet. Das Sperrrad 90c ist gegenüber den Griffelementen 16c, 18c drehbar gelagert (Figur 14, 15).

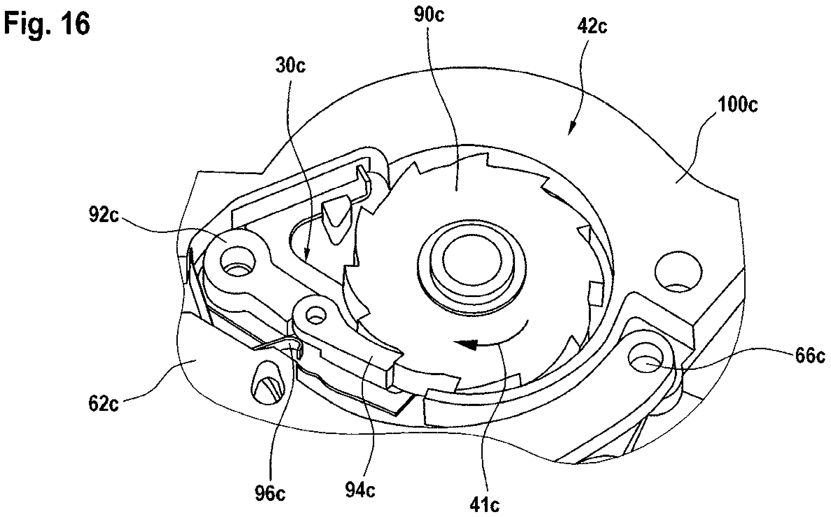

Die Schneidevorrichtung 10c weist die selbstschaltende Kupplungseinheit 22c auf. Die selbstschaltende Kupplungseinheit 22c ist als Freilaufkupplung ausgebildet. Die Kupplungseinheit 22c ist in dem Drehgelenk 42c angeordnet. Die selbstschaltende Kupplungseinheit 22c ist in zumindest einem Betriebszustand, in welchem die Antriebseinheit 20c deaktiviert ist, zu einer Entkopplung der Antriebseinheit 20c vorgesehen. Die selbstschaltende Kupplungseinheit 22c ist zu einer Realisierung eines vollständigen Handbetriebs dazu vorgesehen die Antriebseinheit 20c zu entkoppeln. Die selbstschaltende Kupplungseinheit 22c weist ein Sperrklinkenelement 30c auf. Das Sperrklinkenelement 30c ist von dem zweiten Griffelement 18c betätigbar ausgebildet. Das Sperrklinkenelement 30c weist zwei gelenkig verbundene Arme 92c, 94c auf. Ein erster Arm 92c ist mit einem dem zweiten Arm 94c abgewandten Ende drehbar mit dem zweiten Griffelement 18c verbunden. Der erste Arm 94c ist drehbar mit dem Grundkörper 100c des zweiten Griffelements 18c verbunden. Der zweite Arm 94c ist über eine Feder 96c federbeaufschlagt. Die Feder 96c drückt den zweiten Arm 94c gegen das Sperrrad 90c. Ferner ist der zweite Arm 94c über ein Hebelelement 98c mit dem Griffbereich 62c des zweiten Griffelements 18c verbunden. Der zweite Arm 94c des Sperrklinkenelements 30c kann über das Hebelelement 98c gegen die Feder 96c außer Eingriff mit dem Sperrrad 90c gezogen werden. Dies erfolgt insbesondere, wenn der Griffbereich 62c lediglich von der nicht weiter sichtbaren Öffnungsfeder beaufschlagt wird. So kann gewährleistet werden, dass die Kupplungseinheit 22c bei fehlendem Druck eines Bedieners auf den Griffbereich 62c öffnet. Wird dagegen von einem Bediener Druck gegen den Griffbereich 62c ausgeübt, wird der zweite Arm 94c über die Feder 96c gegen das Sperrrad 90c gedrückt. Wird das Sperrrad 90c von der Antriebseinheit 20c in Antriebsrichtung 41c angetrieben, verkantet das Sperrrad 90c gegen das Sperrklinkenelement 30c und übt über das Sperrklinkenelement 30c ein Drehmoment gegen den Grundkörper 100c des zweiten Griffelements 18c aus. Es wird eine Kraft erzeugt, welche ein Schließen der Schneidevorrichtung 10c unterstützt. Das zweite Griffelement 18c kann daraufhin von einem Bediener leichter gegen das erste Griffelement 16c verdreht werden. Wird die Schneidevorrichtung 10c dagegen manuell geschlossen, kann das Sperrklinkenelement 30c gegen die Federkraft der Feder 96c über die Rampen des Sperrrads 90c rutschen. Die Schneidevorrichtung 10c kann so ohne Unterstützung der Antriebseinheit 20c geschlossen werden. Wird das zweite Griffelement 18c von einem Bediener losgelassen, wird das Sperrklinkenelement 30c über das Hebelelement 98c aus dem Sperrrad 90c gezogen und die Schneidevorrichtung 10c kann mittels der nicht weiter sichtbaren Öffnungsfeder selbsttätig öffnen (Figur 15, 16).

Ferner weist die Schneidevorrichtung 10c eine nicht weiter sichtbare Steuereinheit auf. Die Schneidevorrichtung 10c weist ferner einen Kraftsensor 40c auf. Der Kraftsensor 40c ist in dem zweiten Griffelement 18c der Griffelemente 16c, 18c integriert. Der Kraftsensor 40c ist in dem Grundkörper 100c des zweiten Griffelements 18c angeordnet. Ferner ist der Kraftsensor 40c mit einem Griffbereich 62c des zweiten Griffelements 18c gekoppelt. Der Kraftsensor 40c ist zwischen dem Grundkörper 100c und dem Griffbereich 62c angeordnet. Der Griffbereich 62c wird an einem freien Ende des Grundkörpers 100c mittels einer Feder gegen den Grundkörper 100c abgestützt. Die Feder bildet einen Teil des Kraftsensors 40c. Bei einem Schließen der Schneidevorrichtung 10c wird der Griffbereich 62c gegen eine Federkraft der Feder gegen den Grundkörper 100c verschwenkt. Der Kraftsensor 40c weist die Feder und einen Schalter auf. Der Schalter schließt bei einer definierten Annäherung des Griffbereichs 62c gegen den Grundkörper 100c. Der Kraftsensor 40c ist mit der Steuereinheit 52c verbunden. Grundsätzlich wäre auch eine alternative, einem Fachmann als sinnvoll erscheinende Ausbildung des Kraftsensors 40c denkbar. Beispielsweise wäre denkbar, dass der Kraftsensor 40c einen Piezokristall aufweist, welcher zwischen dem Griffbereich 62c und dem Grundkörper 100c angeordnet ist (Figur 13, 15).

Des Weiteren weist die Schneidevorrichtung 10c einen nicht weiter sichtbaren Wegsensor auf. Der Wegsensor ist mit der Steuereinheit 52c verbunden.

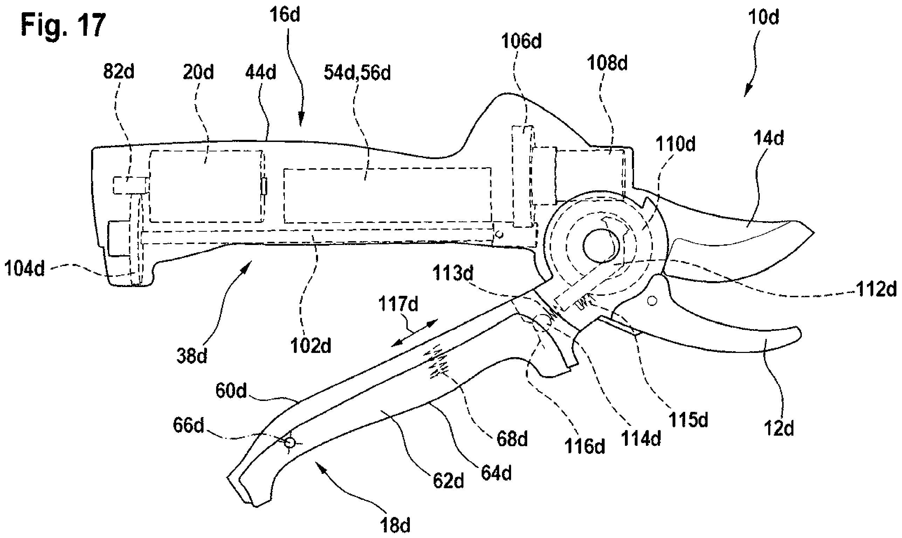

Figur 17 zeigt eine weitere alternative erfindungsgemäße Schneidevorrichtung 10d. Die Schneidevorrichtung 10d ist als eine Gartenschneidevorrichtung ausgebildet. Die Schneidevorrichtung 10d ist als eine Gartenschere ausgebildet. Die Schneidevorrichtung 10d weist zwei relativ zueinander bewegbare Schneidelemente 12d, 14d auf. Ferner weist die Schneidevorrichtung 10d zwei relativ zueinander bewegbare Griffelemente 16d, 18d auf. Die Griffelemente 16d, 18d sind über ein Drehgelenk 42d verschwenkbar zueinander ausgebildet. Die Schneidelemente 12d, 14d sind ebenfalls über das Drehgelenk 42d verschwenkbar zueinander ausgebildet. Das Drehgelenk 42d ist zwischen den Griffelementen 16d, 18d und den Schneidelementen 12d, 14d angeordnet. Des Weiteren ist in dem Drehgelenk 42d eine nicht weiter sichtbare Öffnungsfeder angeordnet.

Das zweite Griffelement 18d ist zweitteilig ausgebildet. Das zweite Griffelement 18d weist ein Griffgehäuse 60d und einen Griffbereich 62d auf. Der Griffbereich 62d bildet an dem zweiten Griffelement 18d eine Auflagefläche 64d für eine Hand, insbesondere die Finger, des Bedieners. Der Griffbereich 62d ist gegenüber dem Griffgehäuse 60d begrenzt um eine Achse 66d schwenkbar. Der Griffbereich 62d wird an einem freien Ende mittels einer Feder 68d gegen das Griffgehäuse 60d abgestützt.

Ferner weist die Schneidevorrichtung 10d eine Antriebseinheit 20d auf. Die Antriebseinheit 20d ist in dem ersten Griffelement 16d angeordnet. Die Antriebseinheit 20d ist in einem Griffgehäuse 44d des Griffelements 16d angeordnet. Die Antriebseinheit 20d ist an einem den Schneidelementen 12d, 14d abgewandten Ende des ersten Griffelements 16d angeordnet.

Des Weiteren weist die Schneidevorrichtung 10d eine Getriebeeinheit 38d auf. Die Getriebeeinheit 38d ist in dem ersten Griffelement 16d angeordnet. Die Getriebeeinheit 38d ist in dem Griffgehäuse 44d des Griffelements 16d angeordnet. Die Getriebeeinheit 38d ist direkt von einem Ritzel 82d der Antriebseinheit 20d antriebbar. Das Ritzel 82d ist auf einer den Schneidelementen 12d, 14d abgewandten Seite der Antriebseinheit 20d angeordnet. Das Ritzel 82d der Antriebseinheit 20d kämmt ein auf einer Welle 102d aufgepresstes Zahnrad 104d. Die Welle 102d ist an der Antriebseinheit 20d vorbei in Richtung des Drehgelenks 42d geführt. Die Welle 102d kämmt mit einer Verzahnung, welche auf einer dem Zahnrad 104d angewandten Seite eingebracht ist, ein weiteres Zahnrad 106d. Das weitere Zahnrad 106d ist mit einer Spindel 108d drehfest verbunden, welche nicht weiter sichtbar ein Hohlrad 110d einer selbstschaltenden Kupplungseinheit 22d kämmt. Das Hohlrad 110d ist über die Getriebeeinheit 38d von der Antriebseinheit 20d antreibbar. Das Hohlrad 110d ist in dem Drehgelenk 42d angeordnet. Das Hohlrad 110d ist gegenüber den Griffelementen 16d, 18d drehbar gelagert (Figur 14, 15).

Die Schneidevorrichtung 10d weist die selbstschaltende Kupplungseinheit 22d auf. Die selbstschaltende Kupplungseinheit 22d ist als Freilaufkupplung ausgebildet. Die Kupplungseinheit 22d ist in dem Drehgelenk 42d angeordnet. Die selbstschaltende Kupplungseinheit 22d ist in zumindest einem Betriebszustand, in welchem die Antriebseinheit 20d deaktiviert ist, zu einer Entkopplung der Antriebseinheit 20d vorgesehen. Die selbstschaltende Kupplungseinheit 22d ist zu einer Realisierung eines vollständigen Handbetriebs dazu vorgesehen die Antriebseinheit 20d zu entkoppeln. Die selbstschaltende Kupplungseinheit 22d weist ein Mitnahmeelement 112d auf. Das Mitnahmeelement 112d ist von dem zweiten Griffelement 18d betätigbar ausgebildet. Das Mitnahmeelement 112d ist von dem Griffbereich 62d des zweiten Griffelements 18d betätigbar ausgebildet. An dem Mitnahmeelement 112d ist über eine Feder 113d eine Kugel 114d angeordnet. Das Mitnahmeelement 112d wird über eine weitere Feder 115d in Richtung der Kugel 114d gedrückt. Das Mitnahmeelement 112d und die Kugel 114d sind entlang einer Haupterstreckungsrichtung 117d des zweiten Griffelements 18d tangential in dem zweiten Griffelement 18d gelagert. Die Kugel 114d liegt an einer Kulissenfläche 116d des Griffbereichs 62d an. Die Kulissenfläche 116d, weist, entlang der Haupterstreckungsrichtung 117d des zweiten Griffelements 18d betrachtet, verschiedene Ebenen auf, die nebeneinander angeordnet sind. Die Kulissenfläche 116d weist zwei Ebenen mit, relativ zu der Haupterstreckungsrichtung 117d verschiedene Höhen auf. Abhängig von einer Lage des Griffbereichs 62d zu dem Griffgehäuse 60d des zweiten Griffelements 18d wird die Kulissenfläche 116d relativ zu der Kugel 114d verschoben. Die Kugel 114d liegt abhängig von einer Lage des Griffbereichs 62d zu dem Griffgehäuse 60d an verschiedenen Punkten der Kulissenfläche 116d an. Abhängig von einem Anlagepunkt der Kugel 114d an der Kulissenfläche 116d wird durch die unterschiedlichen Ebenen der Kulissenfläche 116d eine tangentiale Verschiebung des Mitnahmeelements 112d bewirkt.

Ist der Griffbereich 62d gegen die Federkraft der Feder 68d mit hoher Kraft gegen das Griffgehäuse 60d gedrückt, wird das Mitnahmeelement 112d über die Kulissenfläche 116d tangential in Richtung des Drehgelenks 42d gedrückt. Das Mitnahmeelement 112d wird gegen eine Innenverzahnung des Hohlrads 110d gedrückt. Das Mitnahmeelement 112d weist in diesem Kontaktbereich ebenfalls eine Verzahnung auf. In diesem Zustand ist die Kupplungseinheit 22d geschlossen. In geschlossenem Zustand der Kupplungseinheit 22d kann von der Antriebseinheit 20d über das Hohlrad 110d ein Drehmoment auf das Mitnahmeelement 112d ausgeübt werden. Von dem Mitnahmeelement 112d wird ein Drehmoment auf das zweite Griffelement 18d übertragen. Bei einem Antrieb des Hohlrads 110d in Antriebsrichtung 41d wird eine Kraft erzeugt, welche ein Schließen der Schneidevorrichtung 10d unterstützt. Das zweite Griffelement 18d kann daraufhin von einem Bediener vorteilhaft leicht gegen das erste Griffelement 16d verdreht werden.

Wird der Griffbereich 62d von der Feder 68d von dem Griffgehäuse 60d weggedrückt, wird das Mitnahmeelement 112d über die Kulissenfläche 116d und die Feder 115d tangential von der Innenverzahnung des Hohlrads 110d beabstandet. In diesem Zustand ist die Kupplungseinheit 22d geöffnet. Wird die Schneidevorrichtung 10d lediglich mit geringer Kraft geschlossen, oder ist die Schneidevorrichtung 10d geöffnet, ist das Mitnahmeelement 112d außer Eingriff mit dem Hohlrad 110d und die Griffelemente 16d, 18d können ohne einen Widerstand der Getriebeeinheit 38d und der Antriebseinheit 20d verdreht werden. Es findet in diesem Zustand ein manueller Betrieb statt.

Ferner weist die Schneidevorrichtung 10d eine nicht weiter sichtbare Steuereinheit auf. Die Schneidevorrichtung 10d weist ferner einen Kraftsensor 40d auf. Der Kraftsensor 40d ist in dem zweiten Griffelement 18d der Griffelemente 16d, 18d integriert. Der Kraftsensor 40d ist in dem Griffgehäuse 60d des zweiten Griffelements 18d angeordnet. Ferner ist der Kraftsensor 40d mit einem Griffbereich 62d des zweiten Griffelements 18d gekoppelt. Der Kraftsensor 40d ist zwischen dem Griffgehäuse 60d und dem Griffbereich 62d angeordnet. Der Griffbereich 62d wird an einem freien Ende des Griffgehäuse 60d mittels der Feder 68d gegen das Griffgehäuse 60d abgestützt. Die Feder 68d bildet einen Teil des Kraftsensors 40d. Bei einem Schließen der Schneidevorrichtung 10d wird der Griffbereich 62d gegen eine Federkraft der Feder 68d gegen das Griffgehäuse 60d verschwenkt. Der Kraftsensor 40d weist die Feder 68d und einen Schalter 72d auf. Der Schalter 72d schließt bei einer definierten Annäherung des Griffbereich 62d gegen das Griffgehäuse 60d. Der Kraftsensor 40d ist dabei derart eingelegt, dass der Schalter 72d geschlossen wird, wenn die Kugel 114d in eine zweite Ebene der Kulissenfläche 116d gelangt, sodass die Kupplungseinheit 22d gleichzeitig geschlossen wird. Der Kraftsensor 40d ist mit der Steuereinheit 52d verbunden.

Des Weiteren weist die Schneidevorrichtung 10d einen nicht weiter sichtbaren Wegsensor auf. Der Wegsensor ist mit der Steuereinheit 52d verbunden.

## Patentansprüche

1. Schneidevorrichtung, insbesondere Gartenschneidevorrichtung, mit zwei relativ zueinander bewegbaren Schneidelementen (12a, 14a; 12b, 14b; 12c, 14c; 12d, 14d), mit zwei relativ zueinander bewegbaren Griffelementen (16a, 18a; 16b, 18b; 16c, 18c; 16d, 18d) und mit zumindest einer Antriebseinheit (20a; 20b; 20c; 20d), die in zumindest einem Betriebszustand dazu vorgesehen ist, eine Bewegung des zweiten Schneidelements (14a; 14b; 14c; 14d) relativ zu dem ersten Schneidelement (12a; 12b; 12c; 12d) zumindest zu unterstützen, wobei zumindest eine selbstschaltende Kupplungseinheit (22a; 22b; 22c; 22d), die in zumindest einem Betriebszustand, in welchem die Antriebseinheit (20a; 20b; 20c; 20d) deaktiviert ist, zu einer Entkopplung der Antriebseinheit (20a; 20b; 20c; 20d) vorgesehen ist, **dadurch gekennzeichnet, dass** die zumindest eine selbstschaltende Kupplungseinheit (22a; 22b; 22c; 22d) als Freilaufkupplung ausgebildet ist, wobei die zumindest eine selbstschaltende Kupplungseinheit (22a; 22b; 22c; 22d), in zumindest einem Betriebszustand zu einer Realisierung eines vollständigen Handbetriebs dazu vorgesehen ist, die Antriebseinheit (20a; 20b; 20c; 20d) zu entkoppeln.

2. Schneidevorrichtung nach Anspruch 1, **dadurch gekennzeichnet, dass** die zumindest eine selbstschaltende Kupplungseinheit (22a; 22b; 22c; 22d), in zumindest einem Betriebszustand zu einer Realisierung eines vollständigen Handbetriebs dazu vorgesehen ist, die Antriebseinheit (20a; 20b; 20c; 20d) zu entkoppeln.

3. Schneidevorrichtung nach Anspruch 2, **dadurch gekennzeichnet, dass** die zumindest eine selbstschaltende Kupplungseinheit (22a; 22b) zumindest einen Klemmkörper (24a; 24b) aufweist.

4. Schneidevorrichtung nach Anspruch 3, **dadurch gekennzeichnet, dass** die zumindest eine selbstschaltende Kupplungseinheit (22a; 22b; 22c; 22d) zumindest einen den Klemmkörper (24a; 24b) aufnehmenden Käfig (26a; 26b) und ein Bremselement (28a; 28b) aufweist, welches in zumindest einem Betriebszustand zu einem Abbremsen des Käfigs (26a; 26b) vorgesehen ist.

5. Schneidevorrichtung zumindest nach Anspruch 2, **dadurch gekennzeichnet, dass** die zumindest eine selbstschaltende Kupplungseinheit (22c; 22d) zumindest ein Sperrklinkenelement (30c; 30d) aufweist, welches insbesondere von einem der Griffelemente (18a; 18b; 18c; 18d) betätigbar ausgebildet ist.

6. Schneidevorrichtung nach einem der vorhergehenden Ansprüche, **gekennzeichnet durch** zumindest eine von der Antriebseinheit (20a; 20b) antreibbare Seilwinde (32a; 32b) und zumindest ein zumindest teilweise auf der Seilwinde (32a; 32b) aufgewickeltes Seil (34a; 34b), welches zumindest teilweise zwischen den Griffelementen (16a, 18a; 16b, 18b) aufgespannt ist.

7. Schneidevorrichtung nach Anspruch 6, **dadurch gekennzeichnet, dass** die zumindest eine selbstschaltende Kupplungseinheit (22a; 22b) zumindest teilweise in die zumindest eine Seilwinde (32a; 32b) integriert ist.

8. Schneidevorrichtung zumindest nach Anspruch 6, **gekennzeichnet durch** zumindest ein mit der Seilwinde (32a; 32b) verbundenes Federelement (36a; 36b), welches insbesondere als eine Spiralfeder ausgebildet ist und welches in zumindest einem Betriebszustand zu einer Spannung des Seils (34a; 34b) vorgesehen ist.

9. Schneidevorrichtung nach einem der vorhergehenden Ansprüche, **gekennzeichnet durch** zumindest eine Getriebeeinheit (38a; 38b; 38c; 38d), welche in einem ersten Griffelement (16a; 16b; 16c; 16d) der Griffelemente (16a, 18a; 16b, 18b; 16c, 18c; 16d, 18d) angeordnet ist.

10. Schneidevorrichtung nach Anspruch 9, **dadurch gekennzeichnet, dass** die Antriebseinheit (20a) und die Getriebeeinheit (38a) räumlich zwischen den Schneidelementen (12a, 14a) und der zumindest einen selbstschaltenden Kupplungseinheit (22a) angeordnet sind.

11. Schneidevorrichtung nach Anspruch 9, **dadurch gekennzeichnet, dass** die zumindest eine Getriebeeinheit (38b), zumindest zwei Getriebestufen aufweist, zwischen welchen die zumindest eine selbstschaltende Kupplungseinheit (22b) angeordnet ist.

12. Schneidevorrichtung nach einem der vorhergehenden Ansprüche, **gekennzeichnet durch** zumindest einen Kraftsensor (40a; 40b; 40c; 40d), welcher in einem zweiten Griffelement (18a; 18b; 18c; 18d) der Griffelemente (16a, 18a; 16b, 18b; 16c, 18c; 16d, 18d) integriert ist.

13. Verfahren zu einem Betrieb einer Schneidevorrichtung (10a; 10b; 10c; 10d) nach einem der vorhergehenden Ansprüche, **dadurch gekennzeichnet, dass** bei Überschreitung einer definierten Bedienerkraft die Antriebseinheit (20a; 20b; 20c; 20d) einem Schließmechanismus der Schneidevorrichtung (10a; 10b; 10c; 10d) zugeschalten wird.

14. Verfahren nach Anspruch 13, **dadurch gekennzeichnet, dass** beim Erreichen einer Endposition der Schneidevorrichtung (10a; 10b; 10c; 10d) die Antriebseinheit (20a; 20b; 20c; 20d) selbsttätig stoppt und zu einer Öffnung der Kupplungseinheit (22a; 22b; 22c; 22d) kurzzeitig entgegen einer Antriebsrichtung (41a; 41b; 41c; 41d) angetrieben wird.

## Claims

1. Cutting device, in particular garden cutting device, having two cutting elements (12a, 14a; 12b, 14b; 12c, 14c; 12d, 14d) that can be moved relative to one another, having two handle elements (16a, 18a; 16b, 18b; 16c, 18c; 16d, 18d) that can be moved relative to each other, and having at least one drive unit (20a; 20b; 20c; 20d) which, in at least one operating state, is provided to at least assist a movement of the second cutting element (14a; 14b; 14c; 14d) relative to the first cutting element (12a; 12b; 12c; 12d), at least one self-switching coupling unit (22a; 22b; 22c; 22d) which, in at least one operating state in which the drive unit (20a; 20b; 20c; 20d) is deactivated, being provided to decouple the drive unit (20a; 20b; 20c; 20d), **characterized in that**
the at least one self-switching coupling unit (22a; 22b; 22c; 22d) is formed as a freewheel clutch, wherein, in at least one operating state for implementing complete manual operation, the at least one self-switching coupling unit (22a; 22b; 22c; 22d) is provided to decouple the drive unit (20a; 20b; 20c; 20d).

2. Cutting device according to Claim 1, **characterized in that** in at least one operating state for implementing complete manual operation, the at least one self-switching coupling unit (22a; 22b; 22c; 22d) is provided to decouple the drive unit (20a; 20b; 20c; 20d).

3. Cutting device according to Claim 2, **characterized in that** the at least one self-switching coupling unit (22a; 22b) has at least one clamping element (24a; 24b).

4. Cutting device according to Claim 3, **characterized in that** the at least one self-switching coupling unit (22a; 22b; 22c; 22d) has at least one cage (26a; 26b) accommodating the clamping element (24a; 24b), and a braking element (28a; 28b) which, in at least one operating state, is provided to brake the cage (26a; 26b).

5. Cutting device at least according to Claim 2, **characterized in that** the at least one self-switching coupling unit (22c; 22d) has at least one ratchet element (30c; 30d), which in particular is designed such that it can be actuated by one of the handle elements (18a; 18b; 18c; 18d).

6. Cutting device according to one of the preceding claims, **characterized by** at least one winch (32a; 32b) that can be driven by the drive unit (20a; 20b) and at least one cable (34a; 34b) which is at least partly wound on the winch (32a; 32b) and which is at least partly stretched between the handle elements (16a, 18a; 16b, 18b).

7. Cutting device according to Claim 6, **characterized in that** the at least one self-switching coupling unit (22a; 22b) is at least partly integrated in the at least one winch (32a; 32b).

8. Coupling device at least according to Claim 6, **characterized by** at least one spring element (36a; 36b) connected to the winch (32a; 32b), which is formed in particular as a spiral spring and which, in at least one operating state, is provided to tension the cable (34a; 34b).

9. Cutting device according to one of the preceding claims, **characterized by** at least one gear unit (38a; 38b; 38c; 38d), which is arranged in a first handle element (16a; 16b; 16c; 16d) of the handle elements (16a, 18a; 16b, 18b; 16c, 18c; 16d, 18d).

10. Cutting device according to Claim 9, **characterized in that** the drive unit (20a) and the gear unit (38a) are arranged physically between the cutting elements (12a, 14a) and the at least one self-switching coupling unit (22a).

11. Cutting device according to Claim 9, **characterized in that** the at least one gear unit (38b) has at least two gear stages, between which the at least one self-switching coupling unit (22b) is arranged.

12. Cutting device according to one of the preceding claims, **characterized by** at least one force sensor (40a; 40b; 40c; 40d), which is integrated in a second handle element (18a; 18b; 18c; 18d) of the handle elements (16a, 18a; 16b, 18b; 16c, 18c; 16d, 18d).

13. Method for operating a cutting device (10a; 10b; 10c; 10d) according to one of the preceding claims, **characterized in that** when a defined operator force is exceeded, the drive unit (20a; 20b; 20c; 20d) is connected up to a closing mechanism of the cutting device (10a; 10b; 10c; 10d).

14. Method according to Claim 13, **characterized in that** when an end position of the cutting device (10a; 10b; 10c; 10d) is reached, the drive unit (20a; 20b; 20c; 20d) stops automatically and is driven to open the coupling unit (22a; 22b; 22c; 22d) briefly counter to a drive direction (41a; 41b; 41c; 41d).

## Revendications

1. Dispositif de coupe, en particulier dispositif de coupe de jardinage, comprenant deux éléments de coupe déplaçables l'un par rapport à l'autre (12a, 14a ; 12b, 14b ; 12c, 14c ; 12d, 14d), comprenant deux éléments de préhension déplaçables l'un par rapport à l'autre (16a, 18a ; 16b, 18b ; 16c, 18c ; 16d, 18d) et au moins une unité d'entraînement (20a ; 20b ; 20c ; 20d) qui, dans au moins un état de fonctionnement, est prévue pour au moins supporter un mouvement du deuxième élément de coupe (14a ; 14b; 14c ; 14d) par rapport au premier élément de coupe (12a ; 12b ; 12c; 12d), au moins une unité d'accouplement à commutation automatique (22a ; 22b ; 22c ; 22d) qui, dans au moins un état de fonctionnement dans lequel l'unité d'entraînement (20a ; 20b ; 20c ; 20d) est désactivée, étant prévue en vue d'un désaccouplement de l'unité d'entraînement (20a ; 20b ; 20c ; 20d),
**caractérisé en ce que** l'au moins une unité d'accouplement à commutation automatique (22a ; 22b ; 22c ; 22d) est réalisée sous forme d'accouplement à roue libre, l'au moins une unité d'accouplement à commutation automatique (22a ; 22b ; 22c ; 22d), dans au moins un état de fonctionnement, étant prévue pour mettre en œuvre un fonctionnement totalement manuel, afin de désaccoupler l'unité d'entraînement (20a ; 20b ; 20c ; 20d).

2. Dispositif de coupe selon la revendication 1, **caractérisé en ce que** l'au moins une unité d'accouplement à commutation automatique (22a ; 22b ; 22c ; 22d), dans au moins un état de fonctionnement, est prévue pour mettre en œuvre un fonctionnement totalement manuel afin de désaccoupler l'unité d'entraînement (20a ; 20b ; 20c ; 20d).

3. Dispositif de coupe selon la revendication 2, **caractérisé en ce que** l'au moins une unité d'accouplement à commutation automatique (22a ; 22b) présente au moins un corps de serrage (24a ; 24b).

4. Dispositif de coupe selon la revendication 3, **caractérisé en ce que** l'au moins une unité d'accouplement à commutation automatique (22a ; 22b ; 22c ; 22d) présente au moins une cage (26a ; 26b) recevant le corps de serrage (24a ; 24b) et un élément de frein (28a ; 28b) qui est prévu, dans au moins un état de fonctionnement, pour freiner la cage (26a ; 26b).

5. Dispositif de coupe selon au moins la revendication 2, **caractérisé en ce que** l'au moins une unité d'accouplement à commutation automatique (22c; 22d) présente au moins un élément à cliquet d'arrêt (30c ; 30d) qui est réalisé notamment de manière à pouvoir être actionné par l'un des éléments de préhension (18a ; 18b ; 18c ; 18d).

6. Dispositif de coupe selon l'une quelconque des revendications précédentes, **caractérisé par** au moins un treuil (32a ; 32b) pouvant être entraîné par l'unité d'entraînement (20a ; 20b) et au moins un câble (34a ; 34b) enroulé au moins en partie sur le treuil (32a ; 32b), qui est tendu au moins en partie entre les éléments de préhension (16a, 18a ; 16b, 18b).

7. Dispositif de coupe selon la revendication 6, **caractérisé en ce que** l'au moins une unité d'accouplement à commutation automatique (22a ; 22b) est intégrée au moins en partie dans l'au moins un treuil (32a ; 32b).

8. Dispositif de coupe selon au moins la revendication 6, **caractérisé par** au moins un élément de ressort (36a ; 36b) connecté au treuil (32a ; 32b), qui est réalisé notamment sous forme de ressort spiral et qui est prévu, dans au moins un état de fonctionnement, pour tendre le câble (34a ; 34b).

9. Dispositif de coupe selon l'une quelconque des revendications précédentes, **caractérisé par** au moins une unité de transmission (38a ; 38b ; 38c ; 38d), qui est disposée dans un premier élément de préhension (16a ; 16b ; 16c ; 16d) des éléments de préhension (16a, 18a ; 16b, 18b ; 16c, 18c ; 16d, 18d) .

10. Dispositif de coupe selon la revendication 9, **caractérisé en ce que** l'unité d'entraînement (20a) et l'unité de transmission (38a) sont disposées spatialement entre les éléments de coupe (12a, 14a) et l'au moins une unité d'accouplement à commutation automatique (22a).

11. Dispositif de coupe selon la revendication 9, **caractérisé en ce que** l'au moins une unité de transmission (38b) présente au moins deux rapports de transmission entre lesquels est disposée l'au moins une unité d'accouplement à commutation automatique (22b).

12. Dispositif de coupe selon l'une quelconque des revendications précédentes, **caractérisé par** au moins un capteur de force (40a ; 40b ; 40c ; 40d) qui est intégré dans un deuxième élément de préhension (18a ; 18b ; 18c ; 18d) des éléments de préhension (16a, 18a ; 16b, 18b ; 16c, 18c ; 16d, 18d) .

13. Procédé pour faire fonctionner un dispositif de coupe (10a ; 10b ; 10c ; 10d) selon l'une quelconque des revendications précédentes, **caractérisé en ce que** dans le cas d'un dépassement d'une force de commande définie, l'unité d'entraînement (20a ; 20b ; 20c ; 20d) est commutée à un mécanisme de fermeture du dispositif de coupe (10a ; 10b ; 10c ; 10d).

14. Procédé selon la revendication 13, **caractérisé en ce que** lorsqu'une position d'extrémité du dispositif de coupe (10a ; 10b ; 10c ; 10d) est atteinte, l'unité d'entraînement (20a ; 20b ; 20c ; 20d) s'arrête automatiquement et est entraînée brièvement dans le sens opposé à une direction d'entraînement (41a ; 41b ; 41c ; 41d) en vue d'une ouverture de l'unité d'accouplement (22a ; 22b ; 22c ; 22d).
